# EUROPEAN PATENT APPLICATION

(11) **EP 4 801 075 A1**
(43) Date of publication of application: **02.09.2026**
(21) Application number: 24890381.7
(22) Date of filing: 10.10.2024
(51) Int. Cl.: H04W 4/30

(54) **COMMUNICATION METHOD AND APPARATUS**

(30) Priority: 17.11.2023 CN 202311554405
(71) Applicant: Huawei Technologies Co., Ltd., Shenzhen, Guangdong 518129 (CN)
(72) Inventor: LI, Fangfang, Shenzhen, Guangdong 518129 (CN); PENG, Chenghui, Shenzhen, Guangdong 518129 (CN); WANG, Fei, Shenzhen, Guangdong 518129 (CN); HUANG, Huanhuan, Shenzhen, Guangdong 518129 (CN)
(74) Representative: MERH-IP Matias Erny Reichl Hoffmann Patentanwälte PartG mbB
(86) International application number: PCT/CN2024/123823
(87) International publication number: WO 2025/103023

(57) **Abstract**

This application discloses a communication method and apparatus applicable to fields such as multi-agent collaboration. The method includes: A collaborative control function network element in the access network or core network receives first collaboration request information, where the first collaboration request information includes description information of a collaboration task. The at least one agent participating in the collaboration task includes a first agent. Subsequently, the collaborative control function network element sends execution request information to the first agent, where the execution request information is used to request the first agent to execute a subtask of the collaboration task. In this way, in embodiments of this application, the collaborative control function network element is introduced into the core network or the access network to control the agent to complete the collaboration task. Because transmission delay between the collaborative control function network element and the agent is relatively low, collaboration requirements of low-delay services can be met.

## Description

### CROSS-REFERENCE TO RELATED APPLICATIONS

This application claims priority to Chinese Patent Application No. 202311554405.5, filed with the China National Intellectual Property Administration on November 17, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With the rapid development of artificial intelligence (artificial intelligence, AI) technologies, the intelligentization trend of terminal devices is becoming increasingly apparent. For example, various agents such as robots, intelligent vehicles, smartphones, and intelligent wearable devices equipped with AI capabilities continue to emerge.

Currently, an increasing number of scenarios in which a plurality of agents collaborate with each other to complete a task (namely, multi-agent collaboration). For example, a plurality of intelligent vehicles collaborate with each other to complete a traffic condition analysis task. Multi-agent collaboration has become an important means to resolve complex problems and achieve more advanced applications.

However, how to achieve multi-agent collaboration requires further research.

### SUMMARY

This application provides a communication method and apparatus to enable an agent to complete a collaboration task under control of a network element in the core network or the access network, thereby reducing transmission delay and meeting collaborations requirement of low-delay services.

According to a first aspect, this application provides a communication method. The method is performed by a collaborative control function network element in a network or a module of the collaborative control function network element, the collaborative control function network element is a control plane network element, and the network is a core network or an access network. Herein, an example in which the method is performed by the collaborative control function network element is used for description. In the method, the collaborative control function network element receives first collaboration request information from a second agent, where the first collaboration request information includes description information of a collaboration task, and at least one agent participating in the collaboration task includes a first agent; and sends execution request information to the first agent, where the execution request information is used to request the first agent to execute a subtask of the collaboration task.

In this way, in this embodiment of this application, the collaborative control function network element is introduced into the core network or the access network, and the collaborative control function network element controls the agent to complete the collaboration task. Because a transmission delay between the network element in the core network or the access network and the agent is low, a collaboration requirement of a low-delay service can be met.

In a possible design, the method further includes: receiving status information from the first agent, where the status information indicates a status of the first agent; and determining that the status information meets a status requirement of the collaboration task for the agent participating in the collaboration task, where the status requirement is determined based on the description information of the collaboration task.

In this way, considering that the agent may have mobility (for example, the agent is a mobile terminal), the collaborative control function network element can determine, when the status information of the first agent meets the status requirement, that the first agent participates in the collaboration task. Therefore, a determined agent participating in the collaboration task is more reasonable and accurate, to avoid a problem that task execution fails because an agent that does not meet the status requirement is determined as an agent participating in the collaboration task.

In a possible design, the status of the first agent includes at least one of the following: a network connection status of the first agent; a compute resource status of the first agent; a location status of the first agent; a battery level status of the first agent; a motion status of the first agent; and a memory status of the first agent.

In a possible design, the method further includes: sending status request information to the first agent, where the status request information is used to request the status information.

In this way, the collaborative control function network element sends the status request information to the first agent, and then the first agent feeds back the status information based on the request of the collaborative control function network element, so that the first agent can feed back the status information in a targeted manner.

In a possible design, the method further includes: receiving capability information from the first agent, and determining that the capability information meets a capability requirement of the collaboration task for the agent participating in the collaboration task, where the capability requirement is determined based on the description information of the collaboration task.

In this way, the collaborative control function network element can determine, when the capability information of the first agent meets the capability requirement, that the first agent is the agent participating in the collaboration task. Therefore, the determined agent participating in the collaboration task is more reasonable and accurate.

In a possible design, the capability information indicates a type of data that the first agent is capable of sensing and/or a type of task that the first agent is capable of executing.

In a possible design, receiving the capability information from the first agent includes: receiving a registration request message from the first agent, where the registration request message includes the capability information.

In a possible design, the method further includes: determining that the first collaboration request information includes an identifier of the first agent.

In a possible design, the method further includes: receiving feedback information from the first agent, where the feedback information includes an execution result of the subtask; determining an execution result of the collaboration task based on the feedback information; and sending the execution result of the collaboration task to the second agent.

In a possible design, the method further includes: sending collaborative configuration request information to the first agent, where the collaborative configuration request information includes a configuration parameter required for the first agent to participate in the collaboration task; and receiving collaborative configuration response information from the first agent, where the collaborative configuration response information indicates that the first agent is successfully configured.

In a possible design, the method further includes: determining, based on the description information of the collaboration task, that a maximum transmission delay required by the collaboration task is greater than a threshold.

In a possible design, the method further includes: receiving a deregistration request message from the first agent; and based on the deregistration request message, releasing a connection between the first agent and the collaborative control function network element.

In a possible design, the first agent is a terminal device or an access network device.

In a possible design, the collaboration task is a task that cannot be completed by an initiator and that needs to be completed by one or more agents through collaboration. The one or more agents are the agent participating in the collaboration task.

In a possible design, the collaboration task is a sensing task or a compute task.

According to a second aspect, this application provides a communication method. The method is performed by a first agent or a module of the first agent. Herein, an example in which the method is performed by the first agent is used for description. In the method, the first agent receives execution request information from a collaborative control function network element in a network, where the execution request information is used to request the first agent to execute a subtask of a collaboration task, and the network is an access network or a core network; and executes the subtask based on the execution request information.

In a possible design, the method further includes: sending status information of the first agent to the collaborative control function network element, where the status information indicates a status of the first agent.

In a possible design, the status of the first agent includes at least one of the following: a network connection status of the first agent; a compute resource status of the first agent; a location status of the first agent; a battery level status of the first agent; a motion status of the first agent; and a memory status of the first agent.

In a possible design, the method further includes: receiving status request information from the collaborative control function network element, where the status request information is used to request the status information.

In a possible design, the method further includes: sending capability information of the first agent to the collaborative control function network element, where the capability information of the first agent indicates a type of data that the first agent is capable of sensing and/or a type of task that the first agent is capable of executing.

In a possible design, sending the capability information of the first agent to the collaborative control function network element includes: sending a registration request message to the collaborative control function network element, where the registration request message includes the capability information.

In a possible design, the method further includes: receiving collaborative configuration request information from the collaborative control function network element, where the collaborative configuration request information includes a configuration parameter required for the first agent to participate in the collaboration task; and sending collaborative configuration response information to the collaborative control function network element, where the collaborative configuration response information indicates that the first agent is successfully configured.

In a possible design, the method further includes: sending feedback information to the collaborative control function network element, where the feedback information includes an execution result of the subtask.

In a possible design, the method further includes: sending deregistration request message to the collaborative control function network element.

In a possible design, the first agent is a terminal device or an access network device.

According to a third aspect, this application provides a communication method. The method is performed by a second agent or a module of the second agent. Herein, an example in which the method is performed by the second agent is used for description. In the method, the second agent sends first collaboration request information to a collaborative control function network element in a network, where the first collaboration request information includes description information of a collaboration task, and the network is an access network or a core network; and receives collaborative response information from the collaborative control function network element, where the collaborative response information includes an execution result of the collaboration task.

In a possible design, the second agent is a terminal device or an access network device.

The communication method according to the second aspect or the third aspect corresponds to the first aspect. For beneficial effect of related technical features, refer to the descriptions of the first aspect.

According to a fourth aspect, this application provides a communication method. The method is performed by a collaborative control function network element in a network or a module of the collaborative control function network element, the collaborative control function network element is a control plane network element, the network is a core network or an access network, and the network further includes a collaborative execution function network element. Herein, an example in which the method is performed by the collaborative control function network element is used for description. In the method, the collaborative control function network element receives first collaboration request information from a second agent, where the first collaboration request information includes description information of a collaboration task, and at least one agent participating in the collaboration task includes a first agent; and sends second collaboration request information to a collaborative execution function network element corresponding to the first agent, where the second collaboration request information includes the description information of the collaboration task and an identifier of the at least one agent participating in the collaboration task.

In this way, in this embodiment of this application, the collaborative control function network element and the collaborative execution function network element are introduced into the core network or the access network, and the collaborative control function network element and the collaborative execution function network element jointly control the agent to complete the collaboration task. Because a transmission delay between the network element in the core network or the access network and the agent is low, a collaboration requirement of a low-delay service can be met.

In a possible design, the method further includes: receiving status information from the first agent, where the status information indicates a status of the first agent; and determining that the status information meets a status requirement of the collaboration task for an agent participating in the collaboration task, where the status requirement is determined based on the description information of the collaboration task.

In this way, considering that the agent may have mobility (for example, the agent is a mobile terminal), the collaborative control function network element can determine, when the status information of the first agent meets the status requirement, that the first agent participates in the collaboration task. Therefore, a determined agent participating in the collaboration task is more reasonable and accurate, to avoid a problem that task execution fails because an agent that does not meet the status requirement is determined as an agent participating in the collaboration task.

In a possible design, the status of the first agent includes at least one of the following: a network connection status of the first agent; a compute resource status of the first agent; a location status of the first agent; a battery level status of the first agent; a motion status of the first agent; and a memory status of the first agent.

In a possible design, the method further includes: sending status request information to the first agent, where the status request information is used to request the status information.

In this way, the collaborative control function network element sends the status request information to the first agent, and then the first agent feeds back the status information based on the request of the collaborative control function network element, so that the first agent can feed back the status information in a targeted manner.

In a possible design, the method further includes: receiving capability information from the first agent, and determining that the capability information of the first agent meets a capability requirement of the collaboration task for the agent participating in the collaboration task, where the capability requirement is determined based on the description information of the collaboration task.

In this way, the collaborative control function network element can determine, when the capability information of the first agent meets the capability requirement, that the first agent is the agent participating in the collaboration task. Therefore, the determined agent participating in the collaboration task is more reasonable and accurate.

In a possible design, the capability information of the first agent indicates a type of data that the first agent is capable of sensing and/or a type of task that the first agent is capable of executing.

In a possible design, receiving the capability information from the first agent includes: receiving a registration request message from the first agent, where the registration request message includes the capability information.

In a possible design, the method further includes: determining that the first collaboration request information includes an identifier of the first agent.

In a possible design, the method further includes: receiving an execution result of a subtask of the collaboration task from the collaborative execution function network element; obtaining an execution result of the collaboration task based on the execution result of the subtask; and sending the execution result of the collaboration task to the second agent.

In a possible design, the method further includes: sending collaborative configuration request information to the first agent, where the collaborative configuration request information includes a configuration parameter required for the first agent to participate in the collaboration task.

In a possible design, the method further includes: determining, based on the description information of the collaboration task, that a maximum transmission delay required by the collaboration task is less than or equal to a threshold.

In a possible design, the method further includes: receiving a deregistration request message from the first agent; and based on the deregistration request message, releasing a connection between the first agent and the collaborative control function network element, and/or releasing a connection between the first agent and the collaborative execution function network element.

In a possible design, the first agent is a terminal device or an access network device.

According to a fifth aspect, this application provides a communication method. The method is performed by a collaborative execution function network element in a network or a module of the collaborative execution function network element, the collaborative execution function network element is a user plane network element, and the network is a core network or an access network. Herein, an example in which the method is performed by the collaborative execution function network element is used for description. In the method, the collaborative execution function network element receives second collaboration request information from a collaborative control function network element, where the second collaboration request information includes description information of a collaboration task and an identifier of at least one agent participating in the collaboration task, and the at least one agent includes a first agent; and sends execution request information to the first agent, where the execution request information is used to request the first agent to execute a subtask of the collaboration task.

In this way, in this embodiment of this application, the collaborative control function network element and the collaborative execution function network element are introduced into the core network or the access network, and the collaborative control function network element and the collaborative execution function network element jointly control the agent to complete the collaboration task. Because a transmission delay between the network element in the core network or the access network and the agent is low, a collaboration requirement of a low-delay service can be met.

In a possible design, the method further includes: receiving an execution result of the subtask from the first agent; and sending the execution result of the subtask to the collaborative control function network element.

In a possible design, the method further includes: receiving collaborative configuration response information from the first agent, where the collaborative configuration response information indicates that the first agent is successfully configured.

In a possible design, the first agent is a terminal device or an access network device.

According to a sixth aspect, this application provides a communication method. The method is performed by a first agent or a module of the first agent. Herein, an example in which the method is performed by the first agent is used for description. In the method, the first agent receives execution request information from a collaborative execution function network element in a network, where the execution request information is used to request the first agent to execute a subtask of a collaboration task, and the network is an access network or a core network; and executes the subtask based on the execution request information.

In a possible design, the method further includes: sending status information of the first agent to a collaborative control function network element in the network, where the status information indicates a status of the first agent.

In a possible design, the status of the first agent includes at least one of the following: a network connection status of the first agent; a compute resource status of the first agent; a location status of the first agent; a battery level status of the first agent; a motion status of the first agent; and a memory status of the first agent.

In a possible design, the method further includes: receiving status request information from the collaborative control function network element in the network, where the status request information is used to request the status information.

In a possible design, the method further includes: sending capability information of the first agent to the collaborative control function network element in the network.

In a possible design, the capability information of the first agent indicates a type of data that the first agent is capable of sensing and/or a type of task that the first agent is capable of executing.

In a possible design, sending the capability information of the first agent to the collaborative control function network element in the network includes: sending a registration request message to the collaborative control function network element, where the registration request message includes the capability information.

In a possible design, the method further includes: receiving collaborative configuration request information from the collaborative control function network element in the network, where the collaborative configuration request information includes a configuration parameter required for the first agent to participate in the collaboration task; and sending collaborative configuration response information to the collaborative control function network element, where the collaborative configuration response information indicates that the first agent is successfully configured.

In a possible design, the method further includes: sending an execution result of the subtask to the collaborative execution function network element.

In a possible design, the method further includes: sending deregistration request message to the collaborative control function network element in the network.

In a possible design, the first agent is a terminal device or an access network device.

According to a seventh aspect, this application provides a communication method. The method is performed by a second agent or a module of the second agent. Herein, an example in which the method is performed by the second agent is used for description. In the method, the second agent sends first collaboration request information to a collaborative control function network element in a network, where the first collaboration request information includes description information of a collaboration task, and the network is an access network or a core network; and receives collaborative response information from the collaborative control function network element, where the collaborative response information includes an execution result of the collaboration task.

In a possible design, the second agent is a terminal device or an access network device.

The communication method according to the fifth aspect or the seventh aspect corresponds to the fourth aspect. For beneficial effect of related technical features, refer to the descriptions of the fourth aspect.

According to an eighth aspect, this application provides a communication method. The method is performed by a collaborative control function network element in a network or a module of the collaborative control function network element, the collaborative control function network element is a control plane network element, and the network is a core network or an access network. Herein, an example in which the method is performed by the collaborative control function network element is used for description. In the method, the collaborative control function network element receives a registration request message from a first agent, where the registration request message includes capability information of the first agent, and the capability information includes information about data that the first agent is capable of sensing and/or information about a task that the first agent is capable of executing; and sends a registration response message to the first agent.

In a possible design, the method further includes: receiving an update request message from the first agent; and updating the capability information of the first agent based on the update request message.

In a possible design, the method further includes: receiving a deregistration request message from the first agent; and based on the deregistration request message of the first agent, releasing a connection between the first agent and the collaborative control function network element, and/or releasing a connection between the first agent and a collaborative execution function network element.

In a possible design, the first agent is a terminal device or an access network device.

According to a ninth aspect, this application provides a communication method. The method is performed by a first agent or a module of the first agent. Herein, an example in which the method is performed by the first agent is used for description. In the method, the first agent sends a registration request message to a collaborative control function network element in a network, where the registration request message includes capability information of the first agent, and the capability information includes information about data that the first agent is capable of sensing and/or information about a task that the first agent is capable of executing, and the network is an access network or a core network; and receives a registration response message from the collaborative control function network element.

In a possible design, the method further includes: sending an update request message to the collaborative control function network element, where the update request message is used to update the capability information of the first agent.

In a possible design, the method further includes: sending deregistration request message to the collaborative control function network element.

In a possible design, the first agent is a terminal device or an access network device.

According to a tenth aspect, this application provides a communication apparatus. The communication apparatus has a function of implementing any one of the first aspect to the ninth aspect. For example, the communication apparatus includes a corresponding module, unit, or means for performing operations in any one of the first aspect to the ninth aspect. The function, the unit, or the means may be implemented by software, may be implemented by hardware, or may be implemented by hardware executing corresponding software.

In a possible design, the communication apparatus includes a processing unit and a communication unit. The communication unit may be configured to receive and send a signal, to implement communication between the communication apparatus and another apparatus. The processing unit may be configured to perform some internal operations of the communication apparatus. Functions performed by the processing unit and the communication unit may correspond to the operations in any one of the first aspect to the ninth aspect.

In a possible design, the communication apparatus includes a processor, and the processor may be configured to be coupled to a memory. The memory may store a computer program or instructions necessary for implementing the function in any one of the first aspect to the ninth aspect. The processor may execute the computer program or the instructions stored in the memory. When the computer program or the instructions are executed, the communication apparatus is enabled to implement the method according to any possible design or implementation of the first aspect to the ninth aspect.

In a possible design, the communication apparatus includes a processor and a memory, and the memory may store a computer program or instructions necessary for implementing the function in any one of the first aspect to the ninth aspect. The processor may execute the computer program or the instructions stored in the memory. When the computer program or the instructions are executed, the communication apparatus is enabled to implement the method according to any possible design or implementation of the first aspect to the ninth aspect.

In a possible design, the communication apparatus includes a processor and an interface circuit. The processor is configured to: communicate with another apparatus through the interface circuit, and perform the method according to any possible design or implementation of the first aspect to the ninth aspect.

It may be understood that in the tenth aspect, the processor may be implemented by hardware or software. When the processor is implemented by hardware, the processor may be a logic circuit, an integrated circuit, or the like. When the processor is implemented by software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in this embodiment of this application.

According to an eleventh aspect, this application provides a communication system. The communication system may include a collaborative control function network element, a first agent, and a second agent in a network. The network is a core network or an access network. The collaborative control function network element is configured to perform the method according to any possible design of the first aspect, the first agent is configured to perform the method according to any possible design of the second aspect, and the second agent is configured to perform the method according to any possible design of the third aspect.

Alternatively, the communication system may include a collaborative control function network element in a network, a collaborative execution function network element in the network, a first agent, and a second agent. The network is a core network or an access network. The collaborative control function network element is configured to perform the method according to any possible design of the fourth aspect, the collaborative execution function network element is configured to perform the method according to any possible design of the fifth aspect, the first agent is configured to perform the method according to any possible design of the sixth aspect, and the second agent is configured to perform the method according to any possible design of the seventh aspect.

Alternatively, the communication system includes a collaborative control function network element in a network and a first agent. The network is a core network or an access network. The collaborative control function network element is configured to perform the method according to any possible design of the eighth aspect, and the first agent is configured to perform the method according to any possible design of the ninth aspect.

According to a twelfth aspect, this application provides a computer-readable storage medium. The computer storage medium stores computer-readable instructions. When a computer reads and executes the computer-readable instructions, the computer is enabled to perform the method according to any possible design of the first aspect to the ninth aspect.

For example, the computer-readable storage medium may be any usable medium that can be accessed by the computer. As an example rather than a limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a thirteenth aspect, this application provides a computer program product. When a computer reads and executes the computer program product, the computer is enabled to perform the method according to any possible design of the first aspect to the ninth aspect.

According to a fourteenth aspect, this application provides a chip (or chip system). The chip includes a processor, and the processor is coupled to a memory and is configured to: read and execute a software program stored in the memory, to implement the method according to any possible design of the first aspect to the ninth aspect.

### BRIEF DESCRIPTION OF DRAWINGS

FIG. 1 is a diagram of a network architecture to which an embodiment of this application is applicable;
FIG. 2 is a diagram of a more specific network architecture to which an embodiment of this application is applicable;
FIG. 3A is a diagram of a collaborative control function network element and a collaborative execution function network element that are introduced into a core network according to an embodiment of this application;
FIG. 3B is a diagram of a collaborative control function network element and a collaborative execution function network element that are introduced into an access network according to an embodiment of this application;
FIG. 4 is a diagram of a registration procedure of an agent according to an embodiment of this application;
FIG. 5 is a diagram of an update procedure of an agent according to an embodiment of this application;
FIG. 6 is a diagram of a deregistration procedure of an agent according to an embodiment of this application;
FIG. 7 is a schematic flowchart corresponding to a communication method according to Embodiment 1 of this application;
FIG. 8A and FIG. 8B are a schematic flowchart corresponding to a communication method according to Embodiment 2 of this application;
FIG. 9 is a schematic flowchart corresponding to a communication method according to Embodiment 3 of this application;
FIG. 10A to FIG. 10C are a schematic flowchart corresponding to a communication method according to Embodiment 4 of this application;
FIG. 11 is a block diagram of a possible example of an apparatus according to an embodiment of this application; and
FIG. 12 is a diagram of a structure of a communication apparatus according to an embodiment of this application.

### DESCRIPTION OF EMBODIMENTS

The following describes technical solutions in embodiments of this application with reference to accompanying drawings in embodiments of this application. All aspects, embodiments, or features are presented in this application by describing a system that may include a plurality of devices, components, modules, and the like. Each system may include another device, component, module, and the like, and/or may not include all devices, components, modules, and the like discussed with reference to the accompanying drawings. In addition, a combination of these solutions may be used.

In embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner. In embodiments of this application, "of (of)", "corresponding, relevant (corresponding, relevant)", and "corresponding (corresponding)" may be interchangeably used sometimes. It should be noted that meanings expressed by the terms are consistent when differences of the terms are not emphasized.

The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) communication system like a long term evolution (long term evolution, LTE) system, a 5G communication system like a new radio (new radio, NR) system, and a future evolved communication system like a 6th generation (6th generation, 6G) mobile communication system. Particularly, the technical solutions in embodiments of this application may also be applied to an information technology (information technology, IT) system.

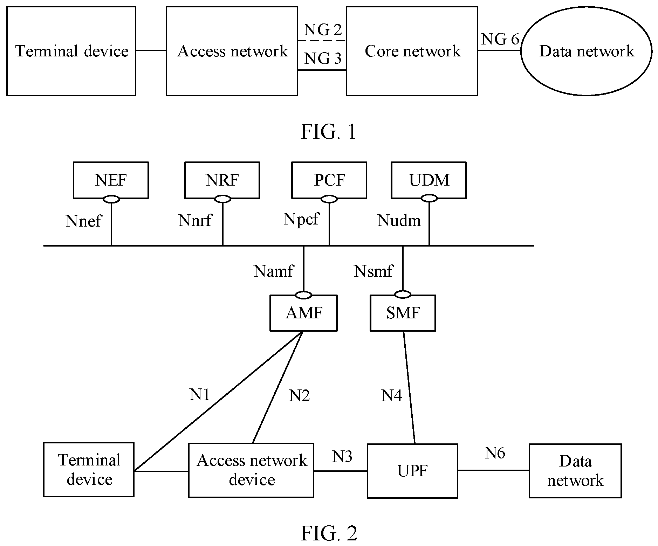

FIG. 1 is a diagram of a network architecture of a communication system to which this application is applicable. The network architecture includes four parts: a terminal device, an access network (access network, AN), a core network (core network, CN), and a data network (data network, DN). The access network may be a radio access network (radio access network, RAN).

The terminal device, the access network, and the core network are main parts of the network architecture, and each may be logically divided into two parts: a user plane and a control plane. The control plane is responsible for mobile network management, and the user plane is responsible for service data transmission. For example, as shown in FIG. 1, in a 5G communication system, a next generation (next generation, NG) 2 reference point is located between a control plane of a (radio) access network and a control plane of a core network, an NG 3 reference point is located between a user plane of the (radio) access network and a user plane of the core network, and an NG 6 reference point is located between the user plane of the core network and a data network.

The following describes in detail each component of the network architecture.

### (1) Terminal device

The terminal device is a device that provides voice and/or data connectivity for a user. The terminal device may also be referred to as user equipment (user equipment, UE), a terminal (terminal), an access terminal, a terminal unit, a terminal station, a mobile station (mobile station, MS), a remote station, a remote terminal, a mobile terminal (mobile terminal, MT), a wireless communication device, a terminal agent, a terminal device, or the like.

For example, the terminal device may be a handheld device having a wireless connection function, or may be a vehicle, a vehicle-mounted device (for example, a vehicle-mounted communication apparatus or a vehicle-mounted communication chip), or the like having a communication function. Currently, some examples of the terminal device are as follows: a mobile phone (mobile phone), a cordless phone, a session initiation protocol (session initiation protocol, SIP) phone, a wireless local loop (wireless local loop, WLL) station, a personal digital assistant (personal digital assistant, PDA) device, a handheld device or a compute device having a wireless communication function, another processing device connected to a wireless modem, a tablet computer, a computer having a wireless transceiver function, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The terminal device may be deployed on land, including an indoor or outdoor terminal device, a handheld terminal device, a wearable terminal device, or a vehicle-mounted terminal device; or may be deployed on a water surface (for example, on a ship); or may be deployed in air (for example, on an airplane, a balloon, or a satellite). A specific technology, a device form, an application scenario, and a name that are used by the terminal device are not limited in embodiments of this application.

### (2) Access network

The access network is deployed near the terminal device, provides a network access function for an authorized user in a specific area, and can determine transmission tunnels of different quality based on user levels, service requirements, and the like to implement transmission of user data. The access network can manage and properly use resources of the access network, provide an access service for the terminal device as required, and forward a control signal and service data between the terminal device and the core network.

An access network device is deployed in the access network, and is configured to connect the terminal device to a wireless network. The access network device may be usually connected to a core network through a wired link (for example, an optical fiber cable). The access network device may also be referred to as a RAN device/node or a base station.

For example, the access network device may include a base station, an evolved NodeB (evolved NodeB, eNodeB) in an LTE system or an evolved LTE system (LTE-Advanced, LTE-A), a next generation NodeB (next generation NodeB, gNB) in a 5G communication system, a transmission reception point (transmission reception point, TRP), a baseband unit (baseband unit, BBU), an access point (access point, AP) in a wireless local area network (wireless local area network, WLAN), an integrated access and backhaul (integrated access and backhaul, IAB) node, a base station in a future mobile communication system, or an access node in a Wi-Fi system. Alternatively, a radio access network device may be a module or unit that completes some functions of a base station, for example, a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

The access network device may be deployed on land, including an indoor or outdoor access network device, a handheld access network device, a wearable access network device, or a vehicle-mounted access network device; or may be deployed on a water surface (for example, on a ship); or may be deployed in air (for example, on an airplane, a balloon, or a satellite). A specific technology, a device form, an application scenario, and a name that are used by the access network device are not limited in embodiments of this application. In embodiments of this application, the access network device may be referred to as an access network (AN) device for short. Unless otherwise specified, the access network device in the following may be an access network device.

### (3) Core network

The core network is used for maintaining subscription data of a mobile network, managing a network element of the mobile network, and providing functions such as session management, mobility management, policy management, and security authentication for the terminal device.

Specific content may include: The core network provides network access authentication for the terminal device when the terminal device is attached; allocates a network resource to the terminal device when the terminal device has a service request; updates a network resource for the terminal device when the terminal device moves; provides a fast recovery mechanism for the terminal device when the terminal device is idle; releases a network resource for the terminal device when the terminal device detaches; and provides a data routing function for the terminal device when the terminal device has service data, for example, forwards uplink data to the data network, or receives downlink data from the data network and forwards the downlink data to the access network, to send the downlink data to the terminal device.

### (4) Data network

The data network is configured to provide a service for the user. In an actual communication process, a client is usually located on the terminal device, and a server is usually located in the data network. The data network may be a private network, for example, a local area network, may be an external network that is not managed and controlled by an operator, for example, an internet (Internet), or may be a dedicated network jointly deployed by operators, for example, a network that provides an IP multimedia network subsystem (IP multimedia core network subsystem, IMS) service.

FIG. 2 is a diagram of a more specific network architecture to which an embodiment of this application is applicable. The network architecture may be a network architecture of a 5G communication system. As shown in FIG. 2, the network architecture includes a terminal device, an access network device, various types of core network elements/functional entities, and a data network.

A user plane of a core network includes a user plane function (user plane function, UPF) network element. A control plane of the core network includes but is not limited to an access and mobility management function (access and mobility management function, AMF) network element, a session management function (session management function, SMF) network element, a network exposure function (network exposure function, NEF) network element, a network function repository function (network function repository function, NRF) network element, a policy control function (policy control function, PCF) network element, and a data storage network element.

The UPF network element is mainly used for connecting to an external network, and forwarding a user data packet according to a routing rule of the SMF network element, for example, sending uplink data to the data network or another UPF network element, and sending downlink data to another UPF network element or the access network device.

The AMF network element is mainly used for access management and mobility management of the terminal device, for example, used for status maintenance of the terminal device, reachability management of the terminal device, forwarding of a mobility management non-access-stratum (mobility management non-access-stratum, MM NAS) message, and forwarding of a session management (session management, SM) N2 message.

The SMF network element is mainly used for session management in a mobile network, including establishing a session for the terminal device, and allocating and releasing a resource for the session. The resource includes session quality of service (quality of service, QoS), a session path, a forwarding rule, and the like. For example, the SMF network element is used for allocating an internet protocol (internet protocol, IP) address to the terminal device or selecting a UPF network element that provides a packet forwarding function.

The NEF network element is used for connection and interaction between another internal network element of the core network and an external application server of the core network, to provide network capability information for the external application server, or provide information of the external application server for a core network element.

The NRF network element is mainly responsible for providing functions of storing and selecting network functional entity information for another network element.

The PCF network element is mainly used for user policy management, including policy authorization, quality of service, and generation of a charging rule, and delivering a corresponding rule to the UPF network element via the SMF network element, to complete installation of a corresponding policy and rule.

The data storage network element is mainly responsible for managing and controlling data. For example, the data storage network element may be a unified data management (unified data management, UDM) network element and/or a unified data repository (unified data repository, UDR) network element. In FIG. 2, an example in which the data storage network element is the UDM network element is used for description. The UDM network element may manage subscription information of the user, including obtaining the subscription information and providing the subscription information for another network element (for example, the AMF network element); generating a 3GPP authentication credential for the terminal device; and registering and maintaining a network element that currently serves the terminal device (for example, an AMF represented by an AMF ID 1 is a current serving AMF of the terminal device, namely, a serving AMF). A function of the UDM network element may be implemented by interacting with the UDR network element. The UDR network element is configured to store data required when the UDM network element performs an operation of the UDM network element. During actual implementation, the UDM network element and the UDR network element may be two independent physical entities, or the UDR network element may be integrated into the UDM network element. This is not limited.

Although not shown, the foregoing network architecture may further include another possible network element. This is not specifically limited.

In FIG. 2, an example in which the control plane of the core network uses a service-based architecture is used for description. In the service-based architecture, each control plane network element is connected to a service bus, and interaction between control plane network elements is performed in a service invoking manner, that is, a control plane network element opens a service to another control plane network element for invoking by the another control plane network element. In another possible implementation, the control plane of the core network may alternatively use a point-to-point communication manner. In point-to-point communication, there is a set of specific messages in a communication interface between control plane network elements. An interface between the terminal device and the AMF network element is referred to as an N1 interface, an interface between the access network device and the AMF network element is referred to as an N2 interface, an interface between the access network device and the UPF network element is referred to as an N3 interface, an interface between the UPF network element and the SMF network element may be referred to as an N4 interface, and an interface between the UPF network element and the data network is referred to as an N6 interface. Certainly, in a future communication system, names of these interfaces may be unchanged, or may be replaced with other names. This is not limited in this application. In a future communication system, for example, a 6th generation (6th generation, 6G) communication system, the foregoing network element or device may still use a name of the network element or device in a 4th generation (4th generation, 4G) or 5G communication system, or have another name. A function of the network element or the device may be completed by one independent network element, or may be jointly completed by several network elements. This is not limited in embodiments of this application.

The various possible network elements/function entities in the network architecture may be network elements in a hardware device, may be software functions running on dedicated hardware, or may be virtualized functions instantiated on a platform (for example, a cloud platform). Optionally, the network elements or function entities may be implemented by one device, may be jointly implemented by a plurality of devices, or may be implemented by different functional modules in one device. This is not specifically limited in embodiments of this application. During actual deployment, the network elements may be co-located. For example, the access and mobility management function network element may be co-located with the session management function network element. The session management function network element may be co-located with the user plane function network element. When two network elements are co-located, interaction between the two network elements provided in embodiments of this application becomes an internal operation of the co-located network element or may be omitted.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with evolution of the communication system architecture and emergence of new service scenarios, the technical solutions provided in embodiments of this application are also applicable to similar technical problems.

The 5G communication system shown in FIG. 2 is used as an example. To implement multi-agent collaboration, a possible implementation is to control, by using a cloud server deployed in the data network, a plurality of agents (namely, a plurality of terminal devices) to complete a task through collaboration. However, because a transmission delay between the cloud server and the terminal device fluctuates between 20 milliseconds (ms) and 75 milliseconds (ms), a low-delay and high-reliability service cannot be ensured. For example, a maximum transmission delay required in an autonomous driving scenario is within 20 ms.

In view of this, a related implementation of the multi-agent collaboration is studied in embodiments of this application. For example, embodiments of this application provide a communication method, to control, by using a network element in a core network or an access network, an agent to complete a collaboration task, thereby reducing a transmission delay and meeting a collaboration requirement of a low-delay service.

In embodiments of this application, a collaborative control function network element is introduced into the core network or the access network, and optionally, a collaborative execution function network element is further introduced. The collaborative control function network element may also be referred to as a multi-agent collaborative control function (multi-agent control function, MACF) network element, and the collaborative execution function network element may also be referred to as a multi-agent collaborative execution function (multi-agent execution function, MAEF) network element. A specific name is not limited in embodiments of this application. For example, the collaborative control function network element may be located on the control plane, that is, the collaborative control function network element belongs to the control plane network element. The collaborative execution function network element may be located on the user plane, that is, the collaborative execution function network element belongs to a user plane network element.

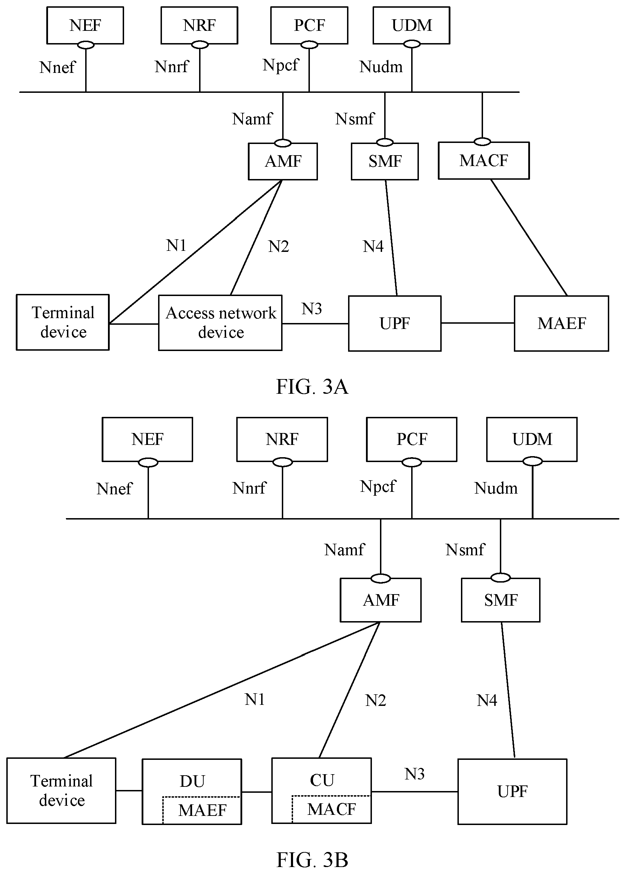

When the collaborative control function network element and the collaborative execution function network element are introduced into the core network, the collaborative control function network element or the collaborative execution function network element may be co-located with another network element in the core network, that is, the another network element executes a function of the collaborative control function network element or the collaborative execution function network element. Alternatively, the collaborative control function network element or the collaborative execution function network element may be a separately disposed network element. When the collaborative control function network element and the collaborative execution function network element are introduced into the access network, the collaborative control function network element or the collaborative execution function network element may be co-located with another network element in the access network, that is, the another network element executes a function of the collaborative control function network element or the collaborative execution function network element. Alternatively, the collaborative control function network element or the collaborative execution function network element may be a separately disposed network element. Refer to FIG. 3A and FIG. 3B. FIG. 3A is described by using an example in which a collaborative control function network element and a collaborative execution function network element are introduced into a core network. In FIG. 3A, the collaborative control function network element and the collaborative execution function network element are separately disposed. FIG. 3B is described by using an example in which a collaborative control function network element and a collaborative execution function network element are introduced into an access network. In FIG. 3B, the collaborative control function network element is located in a CU, and the collaborative execution function network element may be located in a DU.

The collaborative control function network element is configured to control the agent to complete the collaboration task, or the collaborative control function network element and the collaborative execution function network element jointly control the agent to complete the collaboration task. The agent may be an intelligent device, for example, a robot with an intelligent technology, an intelligent vehicle, or a smartphone. In a 5G communication system, the agent may be a terminal device or a network device, and the network device may be an access network device or a core network element.

The following first explains and describes related terms in embodiments of this application. Unless otherwise specified, these explanations are intended to support meanings of related terms, for ease of understanding of embodiments of this application, and should not be considered as a strict limitation on related terms in the protection scope claimed in this application.

### (1) Collaboration task

The collaboration task may also be referred to as a collaboration task, a cooperation task, or an assistance task. The collaboration task may be a task that cannot be completed by an initiator and that needs to be completed by at least one agent through collaboration, that is, an agent participating in the collaboration task includes at least one agent.

The initiator of the collaboration task may be a third-party application terminal or a third-party application server. Alternatively, the initiator of the collaboration task may be an agent. The initiator of the collaboration task is not limited in embodiments of this application. For example, the initiator of the collaboration task may not participate in the collaboration task, and the collaboration task is completed, through collaboration, by a plurality of agents that participate in the collaboration task. The plurality of agents that participate in the collaboration task may respectively execute subtasks of the collaboration task. For example, if the agents that participate in the collaboration task include an agent 1 and an agent 2, the agent 1 may execute a subtask 1 of the collaboration task, and the agent 1 may execute a subtask 2 of the collaboration task. For example, the subtask 1 or the subtask 2 may be a part of the collaboration task. In other words, the agent 1 executes a part of the collaboration task, and the agent 2 executes the other part of the collaboration task, that is, the agent 1 and the agent 2 complete the collaboration task together. In some special scenarios, there may be only one agent (for example, the agent 1) participating in the collaboration task, and the subtask executed by the agent 1 may be the collaboration task. In this case, because collaboration of the plurality of agents is not involved, the "collaboration task" may be replaced with a "task". In embodiments of this application, an example in which "the plurality of agents participate in the collaboration task" is mainly used for description.

The collaboration task in embodiments of this application may be a compute task. For example, the compute task is model training. For example, when a computing center (for example, a central processing unit) of an agent a is busy and cannot execute the compute task, the agent a may request one or more other agents to complete the compute task through collaboration. Alternatively, the collaboration task may be a sensing task. For example, the sensing task includes sensing data detection and/or collection. For example, when a sensor of the agent a is blocked and cannot execute the sensing task, the agent a may request one or more other agents to complete the sensing task through collaboration.

### (2) Agent registration

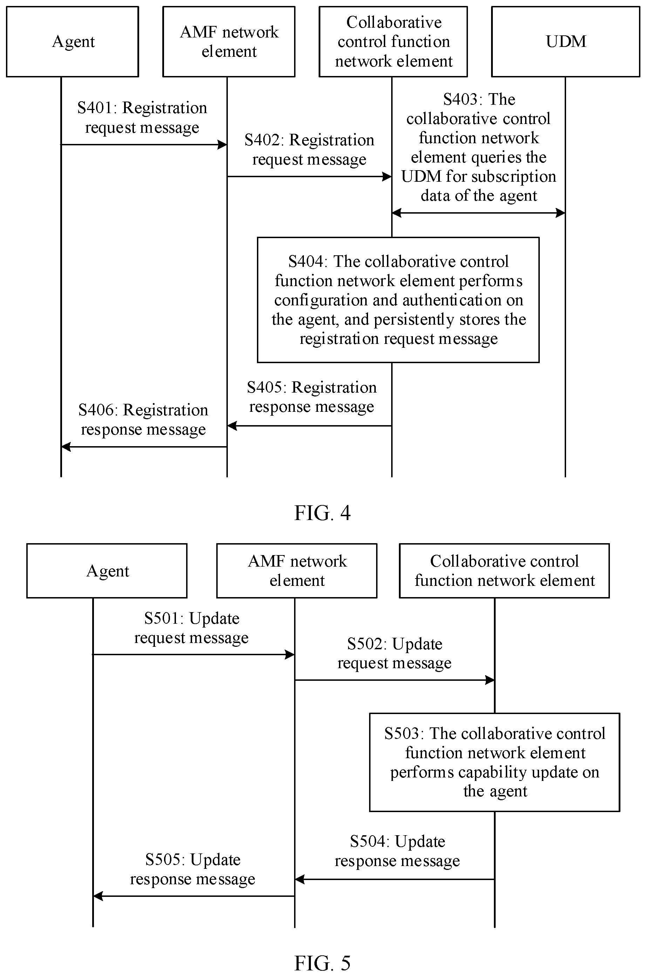

After the collaborative control function network element is introduced in embodiments of this application, the agent may register with the collaborative control function network element, so that the collaborative control function network element performs centralized collaborative control on the agent. The following describes a possible registration procedure with reference to FIG. 4 by using an example in which "the collaborative control function network element is a network element in a core network, and the agent is a terminal device".

FIG. 4 is a diagram of a registration procedure of an agent according to an embodiment of this application. As shown in FIG. 4, the procedure may include:
S401: An agent sends a registration request message to an AMF network element.

Herein, the agent may send the registration request message to the AMF network element via an access network device, and the registration request message may be a non-access stratum message.

For example, the registration request message may include capability information of the agent, and the capability information of the agent indicates a type of data that the agent is capable of sensing and/or a type of task that the agent is capable of executing. The type of the data that the agent is capable of sensing may include at least one of the following: video (video) data, positioning (positioning) data, image (image) data, and radar (radar) data. The type of task that the agent is capable of executing may include at least one of the following: object detection (object-detection) and image-to-text (image-to-text). The object detection may be detecting a specific object (for example, detecting a person or a vehicle). Optionally, the registration request message further includes other possible information such as message type information, information about a vendor to which the agent belongs, a device type (for example, a mobile phone, a vehicle, or a robot) of the agent, an identifier of a network accessed by the agent, and a message format requirement for a request and a response of the agent. This is not specifically limited. Table 1 shows a format example of the registration request message.

**Table 1: Format example of a registration request message**

| |
|---|
| Message (message type information): agent registration |
| Vendor (information about the vendor to which an agent belongs): *** |
| DeviceType (device type of the agent): *** |
| DeviceID (identifier of a network accessed by the agent): *** |
| Instruction (message format requirement for a request and a response of the agent): *** |
| Capability (capability information of the agent): {"SensingData": ["video", "positioning", "image", "radar"], "Action": ["object-detection", "image-to-text"]} |

S402: The AMF network element forwards the registration request message to a collaborative control function network element.

S403: The collaborative control function network element queries UDM for subscription data of the agent.

For example, for a specific implementation in which the collaborative control network element queries the UDM for the subscription data of the agent, refer to an implementation in which a PCF network element or another network element queries the UDM for the subscription data of the agent in the conventional technology. Details are not described.

S404: The collaborative control function network element performs configuration and authentication on the agent, and persistently stores the registration request message.

For example, for a specific implementation in which the collaborative control function network element performs configuration and authentication on the agent, refer to an implementation in which the PCF network element or another network element performs configuration and authentication on the agent in the conventional technology. Details are not described.

S405: The control function network element sends a registration response message to the AMF network element.

For example, the registration response message may include an identifier allocated by the collaborative control function network element to the agent, the collaborative control function network element may maintain an identifier list of registered agents, and the collaborative control function network element allocates different identifiers to different agents.

S406: The AMF network element forwards the registration response message to the agent. Correspondingly, the agent receives the registration response message, to complete registration.

### (3) Agent update

After the agent completes registration with the collaborative control function network element, if the capability information of the agent changes, the agent may initiate an agent update procedure, so that the collaborative control function network element updates the capability information of the agent. Alternatively, the agent may initiate the agent update procedure due to triggering of another reason. This is not specifically limited. The following describes a possible update procedure with reference to FIG. 5 by using an example in which "the collaborative control function network element is a network element in a core network, and the agent is a terminal device".

FIG. 5 is a diagram of an update procedure of an agent according to an embodiment of this application. As shown in FIG. 5, the procedure may include:

S501: An agent sends an update request message to an AMF network element.

Herein, the update request message may include an identifier of the agent and updated capability information. Optionally, the update request message further includes other possible content. This is not specifically limited.

For example, the capability information carried by the agent in a registration request message is {"SensingData": ["video", "positioning", "image", "radar"], "Action": ["object-detection", "image-to-text"]}. If a capability of the agent changes, for example, the agent does not support sensing of positioning data, the updated capability information may be {"SensingData": ["video", "image", "radar"], "Action": ["object-detection", "image-to-text"]}. Table 2 shows a format example of the update request message.

**Table 2: Format example of an update request message**

| |
|---|
| Agent ID (identifier of an agent): *** |
| Capability (capability information of the agent): {"SensingData": ["video", "image", "radar"], "Action": ["object-detection", "image-to-text"]} |

S502: The AMF network element forwards the update request message to a collaborative control function network element.

S503: The collaborative control function network element performs capability update on the agent, for example, persistently stores the updated capability information.

S504: The collaborative control function network element sends an update response message to the AMF network element.

S505: The AMF network element forwards the update response message to the agent. Correspondingly, the agent receives the update response message, to complete update.

### (4) Agent deregistration

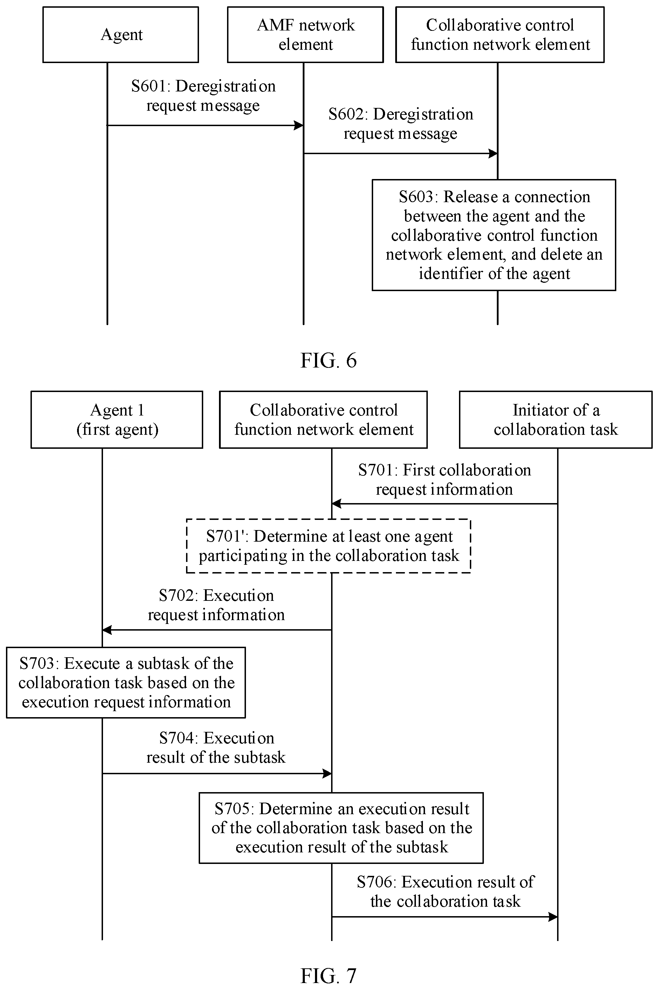

After the agent completes registration with the collaborative control function network element, the agent may initiate an agent deregistration procedure due to some reasons (for example, the agent does not support participation in the collaboration task). The following describes a possible deregistration procedure with reference to FIG. 6 by using an example in which "the collaborative control function network element is a network element in a core network, and the agent is a terminal device".

FIG. 6 is a diagram of a deregistration procedure of an agent according to an embodiment of this application. As shown in FIG. 6, the procedure may include:

S601: An agent sends a deregistration request message to an AMF network element.

Herein, the deregistration request message may include an identifier of the agent and message type information, and the message type information indicates that the message is used for deregistration of the agent. Optionally, the deregistration request message further includes other possible content. This is not specifically limited. Table 3 shows a format example of the deregistration request message.

**Table 3: Format example of a deregistration request message**

| |
|---|
| Agent ID (identifier of an agent): *** |
| Message (message type information): agent deregistration |

S602: The AMF network element forwards the deregistration request message to a collaborative control function network element.

S603: The collaborative control function network element releases a connection between the agent and the collaborative control function network element, and deletes the identifier of the agent.

Optionally, the collaborative control function network element further releases a connection between the agent and a collaborative execution function network element. The connection between the agent and the collaborative control function network element is a control plane connection, and the connection between the agent and the collaborative execution function network element is a user plane connection.

For example, there are a plurality of implementations in which the collaborative control function network element releases the connection between the agent and the collaborative control function network element (or the collaborative execution function network element). For example, refer to a related implementation of releasing the connection in the conventional technology.

### (5) Status information of the agent

The status information of the agent indicates a status of the agent. For example, the status of the agent changes with time, that is, the status of the agent may be different at different time. For example, the status of the agent includes at least one of the following: a network connection status of the agent; a compute resource status of the agent; a location status of the agent; a battery level status of the agent; a motion status of the agent; and a memory status of the agent. Each item may be understood as a status type. The statuses listed herein are merely examples. This is not limited in embodiments of this application.

The network connection status of the agent may include whether a network connection of the agent is normal.

The compute resource status of the agent may include compute resource load of the agent.

The location status of the agent may include global positioning system (global positioning system, GPS) data of the agent.

The battery level status of the agent may include a remaining battery level of the agent.

The motion status of the agent may include a motion trajectory of the agent and a motion speed of the agent.

The memory status of the agent may include memory load of the agent.

Based on the descriptions of the related terms, the following describes in detail the communication method provided in embodiments of this application with reference to Embodiment 1 to Embodiment 4. The communication method provided in embodiments of this application relates to the collaborative control function network element and the one or more agents, and optionally, further relates to the collaborative execution function network element. Unless otherwise specified, the "agent" may refer to an intelligent device, or may refer to a component in the device, for example, a chip or a chip system.

### Embodiment 1

In Embodiment 1, an implementation of "a collaborative control function network element controls an agent to complete a collaboration task" is described.

FIG. 7 is a schematic flowchart corresponding to a communication method according to Embodiment 1 of this application. As shown in FIG. 7, the method includes the following steps.

S701: An initiator of a collaboration task sends first collaboration request information to a collaborative control function network element, where the first collaboration request information includes description information of a collaboration task. Correspondingly, the collaborative control function network element receives the first collaboration request information.

For example, the description information of the collaboration task is to sense a person and a vehicle at an entrance and exit of a scenic spot A from 8:00 to 17:00, and collect statistics about a total quantity of persons and a total quantity of vehicles. For the initiator of the collaboration task, refer to the foregoing descriptions. For example, the initiator of the collaboration task is an agent (which may be referred to as a second agent for ease of description).

S701': The collaborative control function network element determines at least one agent participating in the collaboration task, and the at least one agent includes a first agent.

Herein, there may be a plurality of manners in which the collaborative control function network element determines the at least one agent participating in the collaboration task. The following describes three possible manners with reference to Manner 1 to Manner 3.

### (1) Manner 1

Based on capability information of a plurality of agents and a capability requirement of a collaboration task for an agent participating in the collaboration task, the collaborative control function network element may determine M1 agents that meet the capability requirement as the agents participating in the collaboration task, or determine that M1 agents that meet the capability requirement participate in the collaboration task, where M1 is an integer greater than or equal to 1.

The collaborative control function network element obtains the capability information of an agent in a plurality of manners. For example, an agent may send its capability information to the collaborative control function network element by using a registration request message, and the collaborative control function network element may receive the capability information of the agent. For details, refer to the foregoing descriptions related to FIG. 4. Similarly, the collaborative control function network element obtains the capability requirement in a plurality of manners, for example, by determining the capability requirement based on description information of the collaboration task.

For example, the capability requirement of the collaboration task for the agent participating in the collaboration task includes: supporting execution of object detection. The plurality of agents include an agent 1 to an agent 10, capability information of the agent 1 includes {"Action": ["object-detection", "image-to-text"]}, capability information of the agent 2 includes {"Action": ["object-detection"]}, capability information of the agent 3 includes {"Action": ["object-detection"]}, and the agent 4 to the agent 10 do not support execution of object detection. In this case, agents that meet the capability requirement and that are selected by the collaborative control function network element include the agent 1, the agent 2, and the agent 3 (that is, M1=3). After selecting the agent 1, the agent 2, and the agent 3, the collaborative control function network element may determine that the agents participating in the collaboration task include the agent 1, the agent 2, and the agent 3.

The "agent 1" in this embodiment of this application may also be replaced with the "first agent".

### (2) Manner 2

Based on capability information of a plurality of agents and a capability requirement of a collaboration task for an agent participating in the collaboration task, the collaborative control function network element may select M1 agents that meet the capability requirement from the plurality of agents. For details, refer to Manner 1. Further, based on status information of the M1 agents and a status requirement of the collaboration task for the agent participating in the collaboration task, the collaborative control function network element may determine M2 agents that meet the status requirement from the M1 agents as the agents participating in the collaboration task, where M2 is an integer greater than or equal to 1. For example, if the M2 agents selected by the collaborative control function network element include an agent 1 and an agent 2, it may be determined that the agents participating in the collaboration task include the agent 1 and the agent 2.

The collaborative control function network element obtains the status requirement in a plurality of manners. For example, the collaborative control function network element may determine the status requirement based on description information of the collaboration task. For example, the status requirement of the collaboration task for the agent participating in the collaboration task includes location status (for example, located near an entrance or exit of a scenic spot A), compute resource status (for example, CPF load is less than a threshold 1), and memory status (for example, memory load is less than a threshold 2).

The collaborative control function network element obtains the status information of an agent in a plurality of manners. Herein, the agent 1 is used as an example (the agent 2 and an agent 3 are similar). The collaborative control function network element may send status request information to the agent 1, where the status request information is used to request status information of the agent 1.

The status request information may include an identifier of the agent and status type information, where the status type information indicates the requested status type. For example, the requested status type is location status, compute resource status, or memory status. Optionally, the status request information further includes other information, for example, a status report frequency. The status report frequency may be every 10 ms or every 30 ms. This is not specifically limited. Table 4 shows a format example of the status request information.

**Table 4: Format example of status request information**

| |
|---|
| Agent ID (identifier of an agent): *** |
| Message (status type information): GPS (location status), CPU (compute resource status), memory (memory status) |
| Frequency (optional): status report frequency |

Correspondingly, after receiving the status request information, the agent 1 may send status response information to the collaborative control function network element based on the status request information. The status response information includes the status information of the agent. Optionally, the status response information further includes other information such as the identifier of the agent and a status monitoring timestamp. This is not specifically limited. Table 5 shows a format example of the status response information.

**Table 5: Format example of status response information**

| |
|---|
| Agent ID (identifier of an agent): *** |
| TimeStamp (status monitoring timestamp): *** |
| GPSStatus (location status): *** |
| CPUStatus (compute resource status): *** |
| MemoryStatus (memory status): *** |

The foregoing is described by using an example in which "the agent 1 sends its status information to the collaborative control function network element based on the request of the collaborative control function network element". This embodiment of this application is not limited thereto. For example, the agent 1 periodically sends its status information to the collaborative control function network element. In this case, the status information of the agent 1 may be full information, that is, indicating statuses of all types, or the status information of the agent 1 indicates the status of a default type. For another example, the collaborative control function network element sends a subscription request to the agent 1 in advance, where the subscription request is used to subscribe to one or more statuses of the agent 1 (for example, location status, compute resource status, and memory status of the agent 1). In this case, the agent 1 may send its status information to the collaborative control function network element based on the subscription request.

### (3) Manner 3

The first collaboration request information includes identifiers of K1 agents, where K1 is an integer greater than or equal to 1. In other words, an initiator of a collaboration task indicates that the K1 agents can participate in the collaboration task. For example, the K1 agents include an agent 1, an agent 2, and an agent 3.

Further, based on status information of the K1 agents and a status requirement of the collaboration task for an agent participating in the collaboration task, the collaborative control function network element may determine K2 agents that meet the status requirement from the K1 agents as the agents participating in the collaboration task. For example, if the K2 agents selected by the collaborative control function network element include an agent 1 and an agent 2, it may be determined that the agents participating in the collaboration task include the agent 1 and the agent 2.

Usually, it may be considered by default that the K1 agents indicated by the initiator of the collaboration task meet a capability requirement of the collaboration task for the agent participating in the collaboration task. Therefore, the collaborative control function network element does not need to determine whether the K1 agents meet the capability requirement. In another example, the collaborative control function network element may alternatively select, from the K1 agents, K3 agents that meet the capability requirement, then select, from the K3 agents, K4 agents that meet the status requirement, and determine that the agents participating in the collaboration task include the K4 agents.

In this way, when determining the agents participating in the collaboration task, the collaborative control function network element considers the capability information and/or the status information of the agent, so that the determined agents participating in the collaboration task are more reasonable and accurate.

S701' is an optional step. For example, if the first collaboration request information includes an identifier of the at least one agent participating in the collaboration task, the collaborative control function network element may obtain, based on the first collaboration request information, the agent participating in the collaboration task. In this case, S701' does not need to be performed.

Optionally, the collaborative control function network element determines, based on description information of the collaboration task, whether a maximum transmission delay required by the collaboration task is less than or equal to a threshold. If the maximum transmission delay required by the collaboration task is greater than the threshold, S702 to S706 in Embodiment 1 are performed. If the maximum transmission delay required by the collaboration task is less than or equal to the threshold, steps in Embodiment 3 are performed. A reason is as follows: In Embodiment 3, the collaborative control function network element and a collaborative execution function network element jointly control the agent to complete the collaboration task. The collaborative execution function network element is located on a user plane, and a transmission delay of the user plane is usually less than a transmission delay of a control plane. Therefore, the collaborative execution function network element sends execution request information to the agent, and receives an execution result of a subtask from the agent, so that the transmission delay can be more effectively reduced, to meet a requirement of the collaboration task for the transmission delay.

The collaborative control function network element may alternatively determine, based on another possible factor (for example, a data amount of the collaboration task), to perform the steps in Embodiment 1 or the steps in Embodiment 3. This is not limited in embodiments of this application.

S702: The collaborative control function network element sends execution request information (referred to as execution request information 1 for ease of description) to the agent 1, where the execution request information 1 is used to request the agent 1 to execute a subtask (referred to as a subtask 1 for ease of description) of the collaboration task. Correspondingly, the agent receives the execution request information 1.

It is assumed that the agent that participates in the collaboration task and that is determined by the collaborative control function network element includes the agent 1, the collaborative control function network element sends the execution request information 1 to the agent 1. For example, the execution request information 1 may include description information of the subtask 1 (optionally, an identifier of the agent 1 is further included). Optionally, if the agent participating in the collaboration task further includes another agent (for example, the agent 2), the collaborative control function network element may further send execution request information 2 to the agent 2, where the execution request information 2 is used to request the agent 2 to execute a subtask 2 of the collaboration task. For example, the execution request information 2 may include description information of the subtask 2.

A specific implementation of "how the collaborative control function network element determines the subtask 1 and the subtask 2 based on the collaboration task" is not limited in this embodiment of this application. In addition, if the agent that participates in the collaboration task and that is determined by the collaborative control function network element includes only the agent 1, the subtask 1 is the collaboration task.

In a possible implementation, after determining the agent (for example, the agent 1 and the agent 2) participating in the collaboration task, the collaborative control function network element may send collaborative configuration request information 1 to the agent 1, where the collaborative configuration request information 1 includes a configuration parameter required by the agent 1 for participating in the collaboration task; and send collaborative configuration request information 2 to the agent 2, where the collaborative configuration request information 2 includes a configuration parameter required by the agent 2 for participating in the collaboration task. Correspondingly, the agent 1 may perform configuration based on the collaborative configuration request information 1, and send collaborative configuration response information 1 to the collaborative control function network element, where the collaborative configuration response information 1 indicates that the agent 1 is successfully configured or fails to be configured. The agent 2 may perform configuration based on the collaborative configuration request information 2, and send collaborative configuration response information 2 to the collaborative control function network element, where the collaborative configuration response information 2 indicates that the agent 2 is successfully configured or fails to be configured. If both the agent 1 and the agent 2 are successfully configured, the collaborative control function network element may send the execution request information 1 to the agent 1, and send the execution request information 2 to the agent 2. Alternatively, if the agent 1 is successfully configured and the agent 2 fails to be configured, the collaborative control function network element may send the execution request information 1 to the agent 1, where the execution request information 1 is used to request the agent 1 to execute the subtask 1 of the collaboration task, and the subtask 1 is the collaboration task.

The collaborative configuration request information 1 is used as an example. For example, the collaborative configuration request information 1 includes {'task':'object-detection', 'args':{'starttime':'08:00','endtime':'09:00','object':['people','vehicle'],'frequency':1min}}, that is, start time of an object detection task is 08:00, end time is 09:00, an object includes a person and a vehicle, and detection is performed once every minute.

S703: The agent 1 executes the subtask (namely, the subtask 1) of the collaboration task based on the execution request information 1.

S704: The agent 1 sends feedback information 1 to the collaborative control function network element, where the feedback information 1 includes an execution result of the subtask (namely, the subtask 1). Correspondingly, the collaborative control function network element receives the execution result of the subtask 1.

Optionally, the feedback information 1 further includes the identifier of the agent 1.

Optionally, the agent 2 sends feedback information 2 to the collaborative control function network element, where the feedback information 2 includes an execution result of the subtask 2, and then the collaborative control function network element receives the execution result of the subtask 2.

S705: The collaborative control function network element determines an execution result of the collaboration task based on the execution result of the subtask (namely, the subtask 1).

For example, if the subtask 1 is the collaboration task, the collaborative control function network element may directly use the execution result of the subtask 1 as the execution result of the collaboration task. Alternatively, the collaborative control function network element may perform some possible processing on the execution result of the subtask 1, to obtain the execution result of the collaboration task.

If the collaboration task includes the subtask 1 and the subtask 2, the collaborative control function network element determines the execution result of the collaboration task based on the execution result of the subtask 1 and the execution result of the subtask 2. For example, the collaborative control function network element may directly use the execution result of the subtask 1 and the execution result of the subtask 2 as the execution result of the collaboration task. For another example, the collaborative control function network element may perform some possible processing (for example, aggregation or combination) on the execution result of the subtask 1 and the execution result of the subtask 2, to obtain the execution result of the collaboration task. Herein, two subtasks are used as examples. When there are more subtasks, refer to these examples.

In a possible implementation, for example, the agents participating in the collaboration task include the agent 1 and the agent 2. The agent 1 is used as an example. If the agent 1 fails to execute the subtask 1, the agent 1 may send execution failure information to the collaborative control function network element. If the agent 1 successfully executes the subtask 1, the agent 1 may send the execution result of the subtask 1 to the collaborative control function network element. Therefore, the collaborative control function network element may determine whether all the plurality of subtasks of the collaboration task are successfully executed, and if all the subtasks are successfully executed, determine the execution result of the collaboration task based on execution results of these subtasks. If not all the subtasks are successfully executed, the agent participating in the collaboration task may be re-determined, and execution task information is sent to a determined agent, to continue to execute an uncompleted subtask.

S706: The collaborative control function network element sends the execution result of the collaboration task to the initiator of the collaboration task. Correspondingly, the initiator of the collaboration task receives the execution result of the collaboration task.

Optionally, after reporting the execution result of the subtask 1, the agent 1 sends a deregistration request message to the collaborative control function network element, so that the collaborative control function network element may release a connection between the agent 1 and the collaborative control function network element. For details, refer to the foregoing related descriptions corresponding to FIG. 6.

According to the foregoing method, the collaborative control function network element is introduced into the core network or the access network, and the collaborative control function network element controls the agent to complete the collaboration task. Because a transmission delay between the network element in the core network or the access network and the agent is less than a transmission delay of communication between a cloud server and the agent, a collaboration requirement of a low-delay service can be met.

### Embodiment 2

In Embodiment 2, a specific implementation procedure is described based on Embodiment 1 by using an example in which an initiator of a collaboration task is a second agent and agents that participate in the collaboration task include an agent 1 and an agent 2. When the agent participating in the collaboration task includes more than two agents, refer to the procedure for implementation.

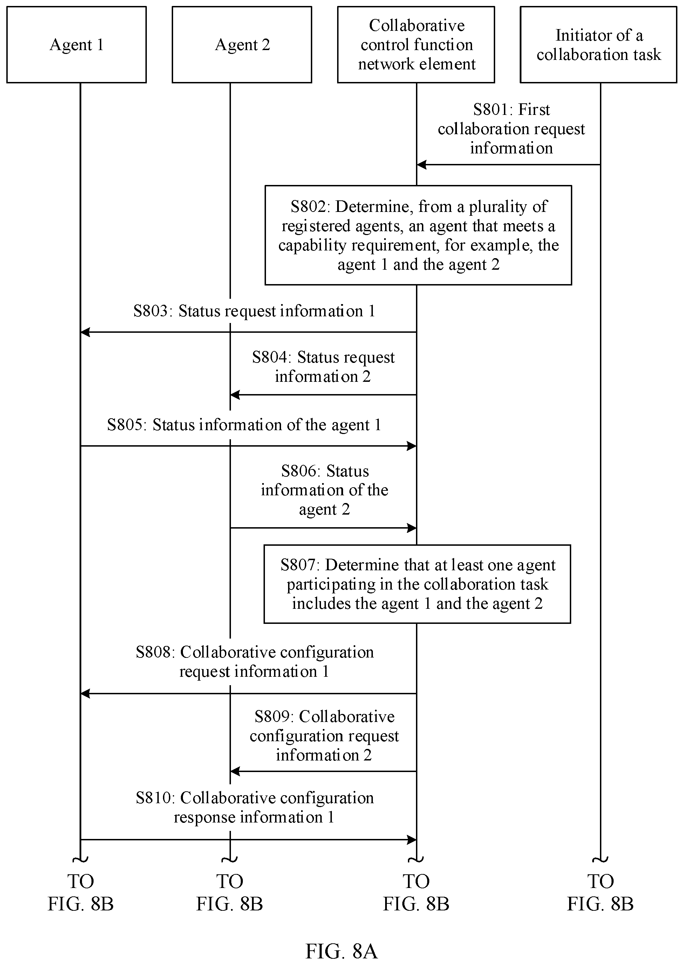

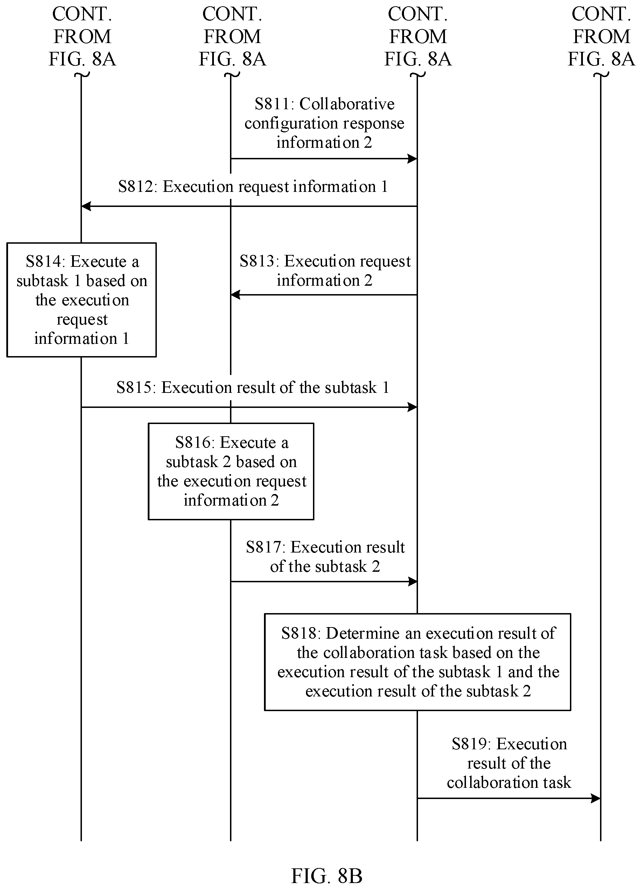

FIG. 8A and FIG. 8B are a schematic flowchart corresponding to a communication method according to Embodiment 2 of this application. As shown in FIG. 8A and FIG. 8B, the method includes the following steps:
S801: A second agent sends first collaboration request information to a collaborative control function network element in a network, where the network is an access network or a core network. Correspondingly, the collaborative control function network element receives the first collaboration request information.

For example, the first collaboration request information includes description information of a collaboration task.

S802: The collaborative control function network element determines, from a plurality of registered agents, an agent that meets a capability requirement, for example, an agent 1 and an agent 2.

S803: The collaborative control function network element sends status request information 1 to the agent 1, where the status request information 1 is used to request status information of the agent 1. Correspondingly, the agent 1 receives the status request information 1.

S804: The collaborative control function network element sends status request information 2 to the agent 2, where the status request information 2 is used to request status information of the agent 2. Correspondingly, the agent 2 receives the status request information 2.

S805: The agent 1 sends the status information of the agent 1 to the collaborative control function network element based on the status request information 1.

S806: The agent 2 sends the status information of the agent 2 to the collaborative control function network element based on the status request information 2.

S807: The collaborative control function network element determines, based on the status information of the agent 1 and the status information of the agent 2, that both the agent 1 and the agent 2 meet a status requirement of the collaboration task for an agent participating in the collaboration task, and further, may determine that the agents participating in the collaboration task include the agent 1 and the agent 2.

S808: The collaborative control function network element sends collaborative configuration request information 1 to the agent 1, where the collaborative configuration request information 1 includes a configuration parameter required by the agent 1 for participating in the collaboration task. Correspondingly, the agent 1 receives the collaborative configuration request information 1.

S809: The collaborative control function network element sends collaborative configuration request information 2 to the agent 2, where the collaborative configuration request information 2 includes a configuration parameter required by the agent 2 for participating in the collaboration task. Correspondingly, the agent 2 receives the collaborative configuration request information 2.

S810: The agent 1 sends collaborative configuration response information 1 to the collaborative control function network element based on the collaborative configuration request information 1, where the collaborative configuration response information 1 indicates that the agent 1 is successfully configured.

S811: The agent 2 sends collaborative configuration response information 2 to the collaborative control function network element based on the collaborative configuration request information 2, where the collaborative configuration response information 2 indicates that the agent 2 is successfully configured.

S812: After determining that the agent 1 is successfully configured, the collaborative control function network element sends execution request information 1 to the agent 1, where the execution request information 1 is used to request the agent 1 to execute a subtask 1 of the collaboration task. Correspondingly, the agent 1 receives the execution request information 1, and executes the subtask 1 based on the execution request information 1.

S813: After determining that the agent 2 is successfully configured, the collaborative control function network element sends execution request information 2 to the agent 2, where the execution request information 2 is used to request the agent 2 to execute a subtask 2 of the collaboration task. Correspondingly, the agent 2 receives the execution request information 2, and executes the subtask 2 based on the execution request information 2.

S814: The agent 1 executes the subtask 1 based on the execution request information 1, to obtain an execution result of the subtask 1.

S815: The agent 1 sends the execution result of the subtask 1 to the collaborative control function network element. Correspondingly, the collaborative control function network element receives the execution result of the subtask 1.

S816: The agent 2 executes the subtask 2 based on the execution request information 2, to obtain an execution result of the subtask 2.

S817: The agent 2 sends the execution result of the subtask 2 to the collaborative control function network element. Correspondingly, the collaborative control function network element receives the execution result of the subtask 2.

S818: The collaborative control function network element determines an execution result of the collaboration task based on the execution result of the subtask 1 and the execution result of the subtask 2.

S819: The collaborative control function network element sends the execution result of the collaboration task to the second agent. Correspondingly, the second agent receives the execution result of the collaboration task.

The procedure shown in FIG. 8A and FIG. 8B corresponds to the procedure shown in FIG. 7, and the steps of the two may be mutually referenced. For example, for S801, refer to S701; for S802 to S807, refer to S701'; for S808 to S813, refer to S702; for S814 and S816, refer to S703; for S815 and S817, refer to S704; for S818, refer to S705; and for S819, refer to S706.

In addition, in Embodiment 1 and Embodiment 2, when the collaborative control function network element is located in the core network, the agent (for example, the agent 1) participating in the collaboration task may be a terminal device, or may be an access network device. If the agent 1 is a terminal device, the agent 1 may communicate with the collaborative control function network element by using a non-access stratum message. If the agent 1 is an access network device, the agent 1 may communicate with the collaborative control function network element via an AMF network element (for example, the agent 1 sends information to the AMF network element by using an N2 interface message, and then the AMF network element forwards the information to the collaborative control function network element).

When the collaborative control function network element is located in the access network, for example, the collaborative control function network element is located in a CU, the agent (for example, the agent 1) participating in the collaboration task may be a terminal device, or may be an access network device (for example, a DU). If the agent 1 is a terminal device, the agent 1 may communicate with the collaborative control function network element by using an air interface message. If the agent 1 is a DU, the agent 1 may communicate with the collaborative control function network element by using an F1 interface message (the F1 interface is an interface between a CU and the DU).

In addition, when the initiator of the collaboration task is an agent (for example, the second agent), for a communication manner between the second agent and the collaborative control function network element, refer to a communication manner between the agent 1 and the collaborative control function network element.

### Embodiment 3

In Embodiment 3, an implementation of "a collaborative control function network element and a collaborative execution function network element jointly control an agent to complete a collaboration task" is described.

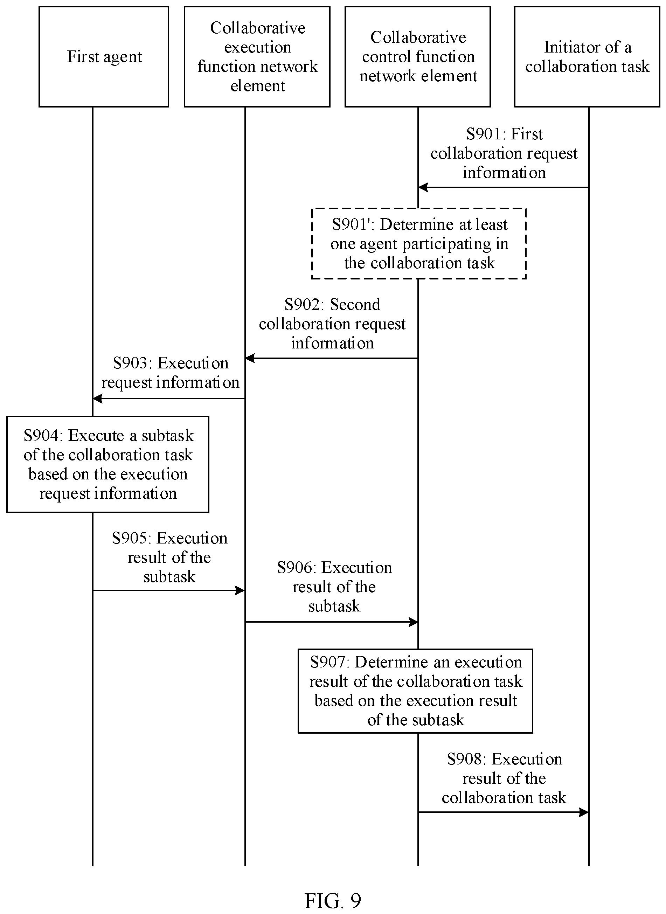

FIG. 9 is a schematic flowchart corresponding to a communication method according to Embodiment 3 of this application. As shown in FIG. 9, the method includes the following steps.

S901: An initiator of a collaboration task sends first collaboration request information to a collaborative control function network element, where the first collaboration request information includes description information of a collaboration task. Correspondingly, the collaborative control function network element receives the first collaboration request information.

S901': The collaborative control function network element determines at least one agent participating in the collaboration task, and the at least one agent includes a first agent.

For example, for a specific implementation of S901, refer to S701 in Embodiment 1. For a specific implementation of S901', refer to S701' in Embodiment 1. Details are not described again.

S902: The collaborative control function network element sends second collaboration request information to a collaborative execution function network element, where the second collaboration request information includes the description information of the collaboration task and an identifier of the at least one agent participating in the collaboration task. Correspondingly, the collaborative execution function network element receives the second collaboration request information.

For example, after determining the at least one agent (for example, an agent 1 and an agent 2) participating in the collaboration task, the collaborative control function network element may determine collaborative execution function network elements corresponding to the agent 1 and the agent 2. The agent 1 and the agent 2 may correspond to a same collaborative execution function network element, for example, a collaborative execution function network element 1. In this case, the collaborative control function network element sends the second collaboration request information to the collaborative execution function network element 1. Alternatively, the agent 1 and the agent 2 may correspond to different collaborative execution function network elements. For example, the agent 1 corresponds to a collaborative execution function network element 1, and the agent 2 corresponds to a collaborative execution function network element 2. In this case, the collaborative control function network element sends collaboration request information 1 to the collaborative execution function network element 1, where the collaboration request information 1 includes the description information of the collaboration task and the identifier of the at least one agent (or an identifier of an agent corresponding to the collaborative execution function network element 1, for example, an identifier of the agent 1). In addition, the collaborative control function network element sends collaboration request information 2 to the collaborative execution function network element 2, where the collaboration request information 2 includes the description information of the collaboration task and the identifier of the at least one agent (or an identifier of an agent corresponding to the collaborative execution function network element 2, for example, an identifier of the agent 2).

A correspondence between the agent and the collaborative execution function network element may be preconfigured or predefined. This is not limited in this embodiment of this application. The following uses an example in which "the agent 1 and the agent 2 may correspond to a same collaborative execution function network element" for description.

In addition, after determining the collaborative execution function network elements corresponding to the agent 1 and the agent 2, the collaborative control function network element may send notification information 1 to the agent 1, where the notification information 1 is used to notify the agent 1 to establish a connection to a collaborative execution function network element. For example, the notification information 1 includes an identifier of the collaborative execution function network element. Correspondingly, the agent 1 establishes the connection to the collaborative execution function network element based on the notification information 1. In addition, the collaborative control function network element may send notification information 2 to the agent 2, where the notification information 2 is used to notify the agent 2 to establish a connection to a collaborative execution function network element. For example, the notification information 2 includes an identifier of the collaborative execution function network element. Correspondingly, the agent 2 establishes the connection to the collaborative execution function network element based on the notification information 2.

Optionally, after determining the agent (for example, the agent 1 and the agent 2) participating in the collaboration task, the collaborative control function network element may further send collaborative configuration request information 1 to the agent 1, and send collaborative configuration request information 2 to the agent 2. Correspondingly, the agent 1 sends collaborative configuration response information 1 to the collaborative execution function network element based on the collaborative configuration request information 1 through the connection between the agent 1 and the collaborative execution function network element. In addition, the agent 2 sends collaborative configuration response information 2 to the collaborative execution function network element based on the collaborative configuration request information 2 through the connection between the agent 2 and the collaborative execution function network element. For the collaborative configuration request information and the collaborative configuration response information, refer to the descriptions in Embodiment 1.

Further, optionally, the agent 1 is used as an example. The collaborative control function network element indicates the agent 1 to send the collaborative configuration response information 1 to the collaborative execution function network element instead of sending the collaborative configuration response information 1 to the collaborative control function network element. There are a plurality of specific indication manners. This is not limited in this embodiment of this application. Alternatively, a protocol predefines that "the agent sends the collaborative configuration response information to the collaborative execution function network element".

S903: The collaborative execution function network element sends execution request information (referred to as execution request information 1 for ease of description) to the agent 1, where the execution request information 1 is used to request the agent 1 to execute a subtask (referred to as a subtask 1 for ease of description) of the collaboration task. Correspondingly, the agent 1 receives the execution request information 1.

It is assumed that the agents participating in the collaboration task include the agent 1. In this case, the collaborative execution function network element sends the execution request information 1 to the agent 1. For example, the execution request information 1 may include description information of the subtask 1. Optionally, if the agent participating in the collaboration task further includes another agent (for example, the agent 2), the collaborative execution function network element may further send execution request information 2 to the agent 2, where the execution request information 2 is used to request the agent 2 to execute a subtask 2 of the collaboration task. For example, the execution request information 2 may include description information of the subtask 2.

A specific implementation of "how the collaborative execution function network element determines the subtask 1 and the subtask 2 based on the collaboration task" is not limited in this embodiment of this application. In addition, if the agent participating in the collaboration task includes only the agent 1, the subtask 1 is the collaboration task.

In a possible implementation, the collaborative execution function network element receives the collaborative configuration response information 1 from the agent 1, and if the collaborative configuration response information 1 indicates that the agent 1 is successfully configured, the collaborative execution function network element sends the execution request information 1 to the agent 1. If the collaborative configuration response information 1 indicates that the agent 1 fails to be configured, the collaborative execution function network element does not send the execution request information 1.

S904: The agent 1 executes the subtask 1 of the collaboration task based on the execution request information 1.

S905: The agent 1 sends an execution result of the subtask 1 to the collaborative execution function network element. Correspondingly, the collaborative execution function network element receives the execution result of the subtask 1.

Optionally, the agent 2 sends an execution result of the subtask 2 to the collaborative execution function network element, and then the collaborative execution function network element receives the execution result of the subtask 2.

S906: The collaborative execution function network element sends the execution result of the subtask 1 to the collaborative control function network element.

Optionally, the collaborative execution function network element further sends the execution result of the subtask 2 to the collaborative control function network element.

For example, the collaborative execution function network element may send the execution result of the subtask 1 and the execution result of the subtask 2 to the collaborative control function network element by using different messages, or may send the execution result of the subtask 1 and the execution result of the subtask 2 to the collaborative control function network element by using a same message. A specific implementation is not limited in this embodiment of this application.

S907: The collaborative control function network element determines an execution result of the collaboration task based on the execution result of the subtask 1.

For example, for a related implementation of S907, refer to the descriptions of S705 in Embodiment 1.

S908: The collaborative control function network element sends the execution result of the collaboration task to the initiator of the collaboration task.

Optionally, after the collaboration task is completed, the collaborative control function network element releases the connection between the agent 1 and the collaborative execution function network element. Alternatively, after reporting the execution result of the subtask 1, the agent 1 sends a deregistration request message to the collaborative control function network element, so that the collaborative control function network element releases the connection between the agent 1 and the collaborative execution function network element, and further releases the connection between the agent 1 and the collaborative control function network element.

According to the foregoing method, the collaborative control function network element and the collaborative execution function network element are introduced into the core network or the access network, and the collaborative control function network element and the collaborative execution function network element jointly control the agent to complete the collaboration task. Because the collaborative execution function network element is located on a user plane, and a transmission delay of the user plane is low, a collaboration requirement of a low-delay service can be met.

### Embodiment 4

In Embodiment 4, a specific implementation procedure is described based on Embodiment 2 by using an example in which an initiator of a collaboration task is a second agent and agents that participate in the collaboration task include an agent 1 and an agent 2. When the agent participating in the collaboration task includes more than two agents, refer to the procedure for implementation.

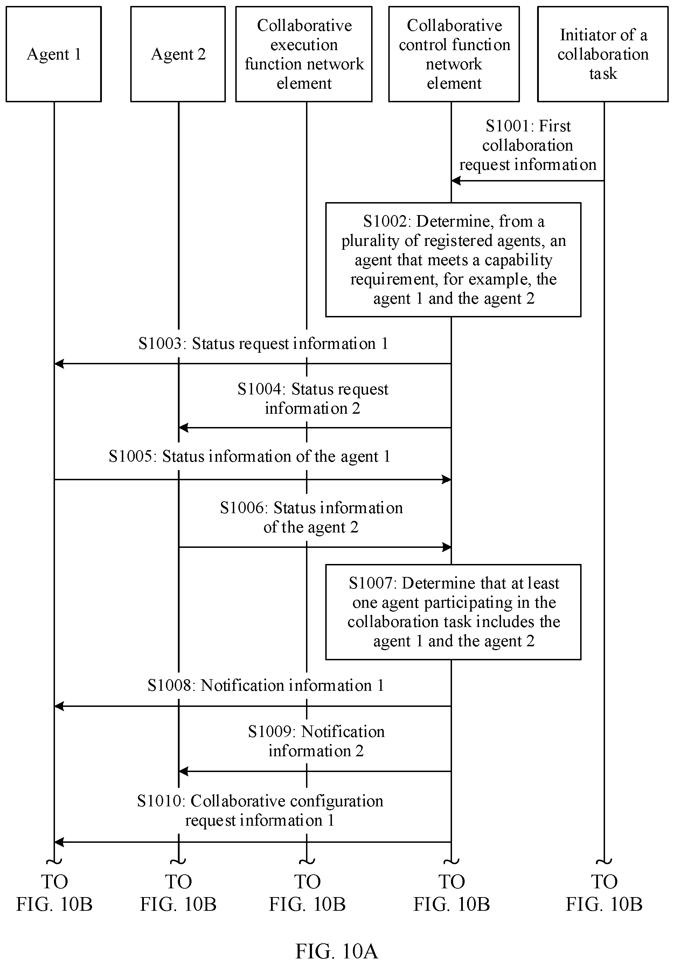

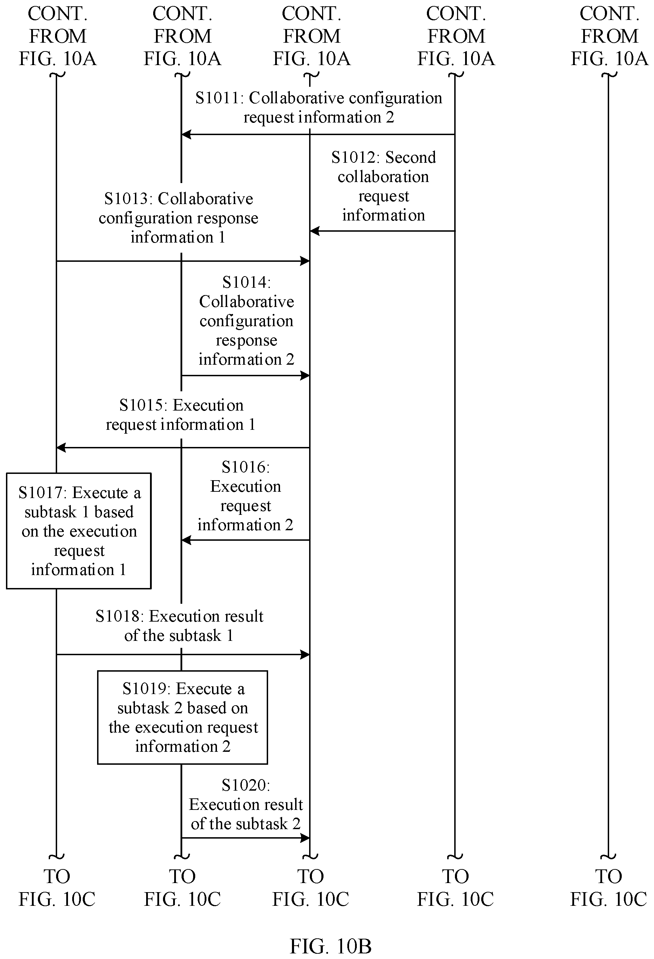

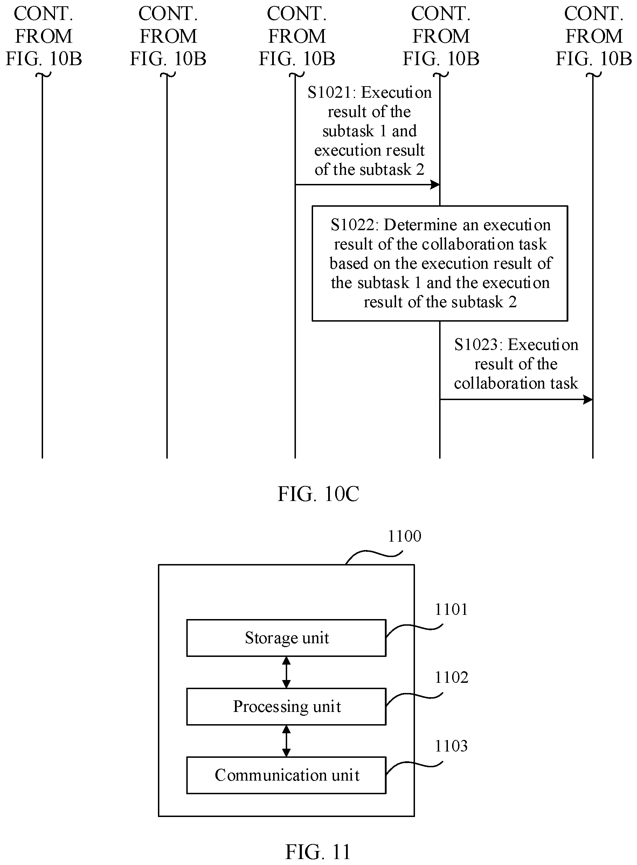

FIG. 10A to FIG. 10C are a schematic flowchart corresponding to a communication method according to Embodiment 4 of this application. As shown in FIG. 10A to FIG. 10C, the method includes the following steps:
S1001: A second agent sends first collaboration request information to a collaborative control function network element in a network, where the network is an access network or a core network. Correspondingly, the collaborative control function network element receives the first collaboration request information.

For example, the first collaboration request information includes description information of a collaboration task.

S1002: The collaborative control function network element determines, from a plurality of registered agents, an agent that meets a capability requirement, for example, an agent 1 and an agent 2.

S1003: The collaborative control function network element sends status request information 1 to the agent 1, where the status request information 1 is used to request status information of the agent 1. Correspondingly, the agent 1 receives the status request information 1.

S1004: The collaborative control function network element sends status request information 2 to the agent 2, where the status request information 2 is used to request status information of the agent 2. Correspondingly, the agent 2 receives the status request information 2.

S1005: The agent 1 sends the status information of the agent 1 to the collaborative control function network element based on the status request information 1.

S1006: The agent 2 sends the status information of the agent 2 to the collaborative control function network element based on the status request information 2.

S1007: The collaborative control function network element determines, based on the status information of the agent 1 and the status information of the agent 2, that both the agent 1 and the agent 2 meet a status requirement of the collaboration task for an agent participating in the collaboration task, and further, may determine that at least one agent participating in the collaboration task includes the agent 1 and the agent 2.

S1008: The collaborative control function network element sends notification information 1 to the agent 1, where the notification information 1 is used to notify the agent 1 to establish a connection to a collaborative execution function network element. Correspondingly, the agent 1 establishes the connection to the collaborative execution function network element based on the notification information 1.

S1009: The collaborative control function network element sends notification information 2 to the agent 2, where the notification information 2 is used to notify the agent 2 to establish a connection to a collaborative execution function network element. Correspondingly, the agent 2 establishes the connection to the collaborative execution function network element based on the notification information 2.

S1010: The collaborative control function network element sends collaborative configuration request information 1 to the agent 1, where the collaborative configuration request information 1 includes a configuration parameter required by the agent 1 for participating in the collaboration task. Correspondingly, the agent 1 receives the collaborative configuration request information 1.

For example, the notification information 1 and the collaborative configuration request information 1 may be carried in a same message or different messages. This is not specifically limited. When the notification information 1 and the collaborative configuration request information 1 are carried in a same message, S1008 and S1010 may be simultaneously performed.

S1011: The collaborative control function network element sends collaborative configuration request information 2 to the agent 2, where the collaborative configuration request information 2 includes a configuration parameter required by the agent 2 for participating in the collaboration task. Correspondingly, the agent 2 receives the collaborative configuration request information 2.

For example, the notification information 2 and the collaborative configuration request information 2 may be carried in a same message or different messages. This is not specifically limited. When the notification information 2 and the collaborative configuration request information 2 are carried in a same message, S1009 and S1011 may be simultaneously performed.

S1012: The collaborative control function network element sends second collaboration request information to the collaborative execution function network element, where the second collaboration request information includes the description information of the collaboration task and an identifier of the at least one agent participating in the collaboration task.

S1013: The agent 1 sends collaborative configuration response information 1 to the collaborative execution function network element based on the collaborative configuration request information 1, where the collaborative configuration response information 1 indicates that the agent 1 is successfully configured.

S1014: The agent 2 sends collaborative configuration response information 2 to the collaborative execution function network element based on the collaborative configuration request information 2, where the collaborative configuration response information 2 indicates that the agent 2 is successfully configured.

S1015: After determining that the agent 1 is successfully configured, the collaborative execution function network element sends execution request information 1 to the agent 1, where the execution request information 1 is used to request the agent 1 to execute a subtask 1 of the collaboration task. Correspondingly, the agent 1 receives the execution request information 1, and executes the subtask 1 based on the execution request information 1.

S1016: After determining that the agent 2 is successfully configured, the collaborative execution function network element sends execution request information 2 to the agent 2, where the execution request information 2 is used to request the agent 2 to execute a subtask 2 of the collaboration task. Correspondingly, the agent 2 receives the execution request information 2, and executes the subtask 2 based on the execution request information 2.

S1017: The agent 1 executes the subtask 1 based on the execution request information 1, to obtain an execution result of the subtask 1.

S1018: The agent 1 sends an execution result of the subtask 1 to the collaborative execution function network element. Correspondingly, the collaborative execution function network element receives the execution result of the subtask 1.

S1019: The agent 2 executes the subtask 2 based on the execution request information 2, to obtain an execution result of the subtask 2.

S1020: The agent 2 sends the execution result of the subtask 2 to the collaborative execution function network element. Correspondingly, the collaborative execution function network element receives the execution result of the subtask 2.

S1021: The collaborative execution function network element sends the execution result of the subtask 1 and the execution result of the subtask 2 to the collaborative control function network element. Correspondingly, the collaborative control function network element receives the execution result of the subtask 1 and the execution result of the subtask 2.

S1022: The collaborative control function network element determines an execution result of the collaboration task based on the execution result of the subtask 1 and the execution result of the subtask 2.

S1023: The collaborative control function network element sends the execution result of the collaboration task to the second agent. Correspondingly, the second agent receives the execution result of the collaboration task.

The procedure shown in FIG. 10A to FIG. 10C corresponds to the procedure shown in FIG. 9, and the steps of the two may be mutually referenced. For example, for S1001, refer to S901; for S1002 to S1007, refer to S901'; for S1008 to S1012, refer to S902; for S1013 and S1016, refer to S903; for S1017 and S1019, refer to S904; for S1018 and S1020, refer to S905; for S1021, refer to S906; for S1022, refer to S907; and for S1023, refer to S908.

In addition, in Embodiment 3 and Embodiment 4, when the collaborative control function network element and the collaborative execution function network element are located in the core network, the agent (for example, the agent 1) participating in the collaboration task may be a terminal device, or may be an access network device. If the agent 1 is a terminal device, the agent 1 may communicate with the collaborative execution function network element via an access network device and a UPF network element (as shown in FIG. 3A). If the agent 1 is an access network device, the agent 1 may communicate with the collaborative execution function network element via a UPF network element.

When the collaborative execution function network element is located in the access network, for example, the collaborative execution function network element is located in a DU, the agent (for example, the agent 1) participating in the collaboration task may be a terminal device, and the agent 1 and the collaborative execution function network element may communicate with each other by using an air interface message.

In addition, in Embodiment 3 and Embodiment 4, for a manner of communication between the collaborative control function network element and an agent (for example, the agent 1) participating in the collaboration task and an initiator (for example, the second agent) of the collaboration task, refer to the descriptions in Embodiment 1 and Embodiment 2.

For the foregoing embodiments:
(1) The foregoing focuses on describing a difference between different embodiments, different implementations, or different examples. For content other than the difference, mutual reference may be made between different embodiments, different implementations, or different examples. In addition, different embodiments, different implementations, or different examples may be partially implemented, may be implemented in combination, or may be partially implemented in combination. Details are not listed one by one in embodiments of this application.
(2) The step numbers in each flowchart described in the foregoing embodiments are merely a procedure execution example, and do not constitute a limitation on a step execution sequence. In embodiments of this application, there may be no strict execution sequence between steps having no time sequence dependence relationship with each other. In addition, not all the steps shown in each flowchart are steps that need to be performed. Some steps may be added or deleted based on each flowchart and an actual requirement, or only some steps included in the flowchart may be performed.

The foregoing mainly describes the solutions provided in embodiments of this application from a perspective of interaction between apparatuses. To implement the foregoing functions, each apparatus may include corresponding hardware structures and/or software modules for performing the functions. A person skilled in the art should be easily aware that, with reference to units and algorithm steps of the examples described in embodiments disclosed in this specification, embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the collaborative control function network element, the collaborative execution function network element, the first agent, and the second agent may be divided into functional units based on the foregoing method examples. For example, each functional unit may be obtained through division based on each corresponding function, or two or more functions may be integrated into one processing unit. The integrated unit may be implemented in a form of hardware, or may be implemented in a form of a software functional unit.

When an integrated unit is used, FIG. 11 is a block diagram of a possible example of an apparatus according to an embodiment of this application. As shown in FIG. 11, an apparatus 1100 may include: a processing unit 1102 and a communication unit 1103. The processing unit 1102 is configured to: control and manage an action of the apparatus 1100. The communication unit 1103 is configured to support communication between the apparatus 1100 and another device. Optionally, the communication unit 1103 is also referred to as a transceiver unit, and may include a receiving unit and/or a sending unit respectively configured to perform a receiving operation and a sending operation. The apparatus 1100 may further include a storage unit 1101, configured to store program code and/or data of the apparatus 1100.

(1) The apparatus 1100 may be the collaborative control function network element in the foregoing embodiments. The processing unit 1102 may support the apparatus 1100 in performing actions of the collaborative control function network element in the foregoing method examples. Alternatively, the processing unit 1102 mainly performs internal actions of the collaborative control function network element in the method example, and the communication unit 1103 may support the communication between the apparatus 1100 and the another device.

For example, in an embodiment, the communication unit 1103 is configured to: receive first collaboration request information from a second agent, where the first collaboration request information includes description information of a collaboration task, and at least one agent participating in the collaboration task includes a first agent; and send second collaboration request information to a collaborative execution function network element corresponding to the first agent, where the second collaboration request information includes the description information of the collaboration task and an identifier of the at least one agent participating in the collaboration task.

In a possible design, the communication unit 1103 is further configured to: receive status information from the first agent, where the status information indicates a status of the first agent; and determine that the status information meets a status requirement of the collaboration task for an agent participating in the collaboration task, where the status requirement is determined based on the description information of the collaboration task.

In a possible design, the status of the first agent includes at least one of the following: a network connection status of the first agent; a compute resource status of the first agent; a location status of the first agent; a battery level status of the first agent; a motion status of the first agent; and a memory status of the first agent.

In a possible design, the communication unit 1103 is further configured to send status request information to the first agent, where the status request information is used to request the status information.

In a possible design, the communication unit 1103 is further configured to: receive capability information from the first agent, and determine that the capability information of the first agent meets a capability requirement of the collaboration task for the agent participating in the collaboration task, where the capability requirement is determined based on the description information of the collaboration task.

In a possible design, the capability information of the first agent indicates a type of data that the first agent is capable of sensing and/or a type of task that the first agent is capable of executing.

In a possible design, the communication unit 1103 is further configured to receive a registration request message from the first agent, where the registration request message includes the capability information.

In a possible design, the communication unit 1103 is further configured to receive an execution result of a subtask of the collaboration task from the collaborative execution function network element; the processing unit 1102 is configured to obtain an execution result of the collaboration task based on the execution result of the subtask; and the communication unit 1103 is further configured to send the execution result of the collaboration task to the second agent.

In a possible design, the communication unit 1103 is further configured to send collaborative configuration request information to the first agent, where the collaborative configuration request information includes a configuration parameter required for the first agent to participate in the collaboration task.

In a possible design, the processing unit 1102 is configured to determine, based on the description information of the collaboration task, that a maximum transmission delay required by the collaboration task is less than or equal to a threshold.

In a possible design, the communication unit 1103 is further configured to receive a deregistration request message from the first agent; and the processing unit 1102 is configured to: based on the deregistration request message, release a connection between the first agent and the collaborative control function network element, and/or release a connection between the first agent and the collaborative execution function network element.

In a possible design, the first agent is a terminal device or an access network device.

(2) The apparatus 1100 may be the collaborative execution function network element in the foregoing embodiments. The processing unit 1102 may support the apparatus 1100 in performing actions of the collaborative execution function network element in the foregoing method examples. Alternatively, the processing unit 1102 mainly performs internal actions of the collaborative execution function network element in the method example, and the communication unit 1103 may support the communication between the apparatus 1100 and the another device.

For example, in an embodiment, the communication unit 1103 is configured to: receive second collaboration request information from a collaborative control function network element, where the second collaboration request information includes description information of a collaboration task and an identifier of at least one agent participating in the collaboration task, and the at least one agent includes a first agent; and send execution request information to the first agent, where the execution request information is used to request the first agent to execute a subtask of the collaboration task.

In a possible design, the communication unit 1103 is further configured to: receive an execution result of the subtask from the first agent; and send the execution result of the subtask to the collaborative control function network element.

In a possible design, the communication unit 1103 is further configured to receive collaborative configuration response information from the first agent, where the collaborative configuration response information indicates that the first agent is successfully configured.

In a possible design, the first agent is a terminal device or an access network device.

(3) The apparatus 1100 may be the first agent in the foregoing embodiments. The processing unit 1102 may support the apparatus 1100 in performing actions of the first agent in the foregoing method examples. Alternatively, the processing unit 1102 mainly performs internal actions of the first agent in the method example, and the communication unit 1103 may support the communication between the apparatus 1100 and the another device.

For example, in an embodiment, the communication unit 1103 is configured to: receive execution request information from a collaborative execution function network element in a network, where the execution request information is used to request the first agent to execute a subtask of a collaboration task, and the network is an access network or a core network; and execute the subtask based on the execution request information.

In a possible design, the communication unit 1103 is configured to: send status information of the first agent to a collaborative control function network element in the network, where the status information indicates a status of the first agent.

In a possible design, the status of the first agent includes at least one of the following: a network connection status of the first agent; a compute resource status of the first agent; a location status of the first agent; a battery level status of the first agent; a motion status of the first agent; and a memory status of the first agent.

In a possible design, the communication unit 1103 is configured to receive status request information from the collaborative control function network element in the network, where the status request information is used to request the status information.

In a possible design, the communication unit 1103 is configured to send capability information of the first agent to the collaborative control function network element in the network.

In a possible design, the capability information of the first agent indicates a type of data that the first agent is capable of sensing and/or a type of task that the first agent is capable of executing.

In a possible design, the communication unit 1103 is configured to send a registration request message to the collaborative control function network element, where the registration request message includes the capability information.

In a possible design, the communication unit 1103 is configured to: receive collaborative configuration request information from the collaborative control function network element in the network, where the collaborative configuration request information includes a configuration parameter required for the first agent to participate in the collaboration task; and send collaborative configuration response information to the collaborative control function network element, where the collaborative configuration response information indicates that the first agent is successfully configured.

In a possible design, the communication unit 1103 is configured to send an execution result of the subtask to the collaborative execution function network element.

In a possible design, the communication unit 1103 is configured to send deregistration request message to the collaborative control function network element in the network.

In a possible design, the first agent is a terminal device or an access network device.

(4) The apparatus 1100 may be the second agent in the foregoing embodiments. The processing unit 1102 may support the apparatus 1100 in performing actions of the second agent in the foregoing method examples. Alternatively, the processing unit 1102 mainly performs internal actions of the second agent in the method example, and the communication unit 1103 may support the communication between the apparatus 1100 and the another device.

For example, in an embodiment, the communication unit 1103 is configured to: send first collaboration request information to a collaborative control function network element in a network, where the first collaboration request information includes description information of a collaboration task, and the network is an access network or a core network; and receive collaborative response information from the collaborative control function network element, where the collaborative response information includes an execution result of the collaboration task.

In a possible design, the second agent is a terminal device or an access network device.

Division into the units in the apparatus is merely logical function division, and in an actual implementation, all or a part of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, the units may be all or partially integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SOC).

The unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The unit configured for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

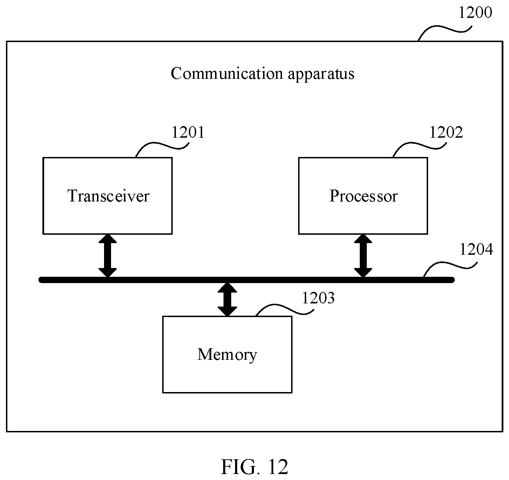

Based on the foregoing embodiments, an embodiment of this application further provides a communication apparatus. As shown in FIG. 12, the communication apparatus 1200 may include a processor 1202. Optionally, the communication apparatus 1200 may further include a transceiver 1201 and/or a memory 1203. The memory 1203 may be disposed inside the communication apparatus 1200, or may be disposed outside the communication apparatus 1200. The processor 1202 may control the transceiver 1201 to receive and send a message and the like.

Specifically, the processor 1202 may be a central processing unit (central processing unit, CPU), a network processor (network processor, NP), or a combination of a CPU and an NP. The processor 1202 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL), or any combination thereof.

The transceiver 1201, the processor 1202, and the memory 1203 are connected to each other. Optionally, the transceiver 1201, the processor 1202, and the memory 1203 are connected to each other through a bus 1204. The bus 1204 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of indication, the bus is indicated by only one thick line in FIG. 12, but this does not indicate that there is only one bus or one type of bus.

In an optional implementation, the memory 1203 is configured to store a program and the like. Specifically, the program may include program code, and the program code includes computer operation instructions. The memory 1203 may include a RAM, and may further include a non-volatile memory (non-volatile memory), for example, one or more disk memories. The processor 1202 executes the application program stored in the memory 1203, to implement the foregoing function, thereby implementing a function of the communication apparatus 1200.

For example, the communication apparatus 1200 may be the collaborative control function network element, the collaborative execution function network element, or the agent in the foregoing embodiments. The transceiver 1201 may implement receiving and sending operations performed by the collaborative control function network element, the collaborative execution function network element, or the agent in the foregoing method embodiments. The processor 1202 may implement an operation other than the receiving and sending operations performed by the collaborative control function network element, the collaborative execution function network element, or the agent in the foregoing method embodiments. Specifically, for related specific descriptions, refer to the related descriptions in the foregoing embodiments. Details are not described herein again.

Terms "system" and "network" may be used interchangeably in embodiments of this application. "At least one" means one or more, and "a plurality of" means two or more. A term "and/or" describes an association relationship between associated objects, and indicates that three relationships may exist. For example, A and/or B may indicate the following three cases: Only A exists, both A and B exist, and only B exists, where A and B may be singular or plural. A character "/" usually indicates an "or" relationship between the associated objects. At least one of the following items (pieces) or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, and are not intended to limit a sequence, a time sequence, priorities, or importance of the plurality of objects.

Embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or the block diagrams of the method, the device (system), and the computer program product according to this application. Computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. A communication method, wherein the method is applied to a collaborative control function network element in a network, the network is an access network or a core network, and the method comprises:
receiving first collaboration request information from a second agent, wherein the first collaboration request information comprises description information of a collaboration task, and at least one agent participating in the collaboration task comprises a first agent; and
sending second collaboration request information to a collaborative execution function network element corresponding to the first agent, wherein the second collaboration request information comprises the description information of the collaboration task and an identifier of the at least one agent participating in the collaboration task.

2. The method according to claim 1, further comprising:
receiving status information from the first agent, wherein the status information indicates a status of the first agent; and
determining that the status information meets a status requirement of the collaboration task for an agent participating in the collaboration task, wherein
the status requirement is determined based on the description information of the collaboration task.

3. The method according to claim 2, wherein the status of the first agent comprises at least one of the following:
a network connection status of the first agent;
a compute resource status of the first agent;
a location status of the first agent;
a battery level status of the first agent;
a motion status of the first agent; and
a memory status of the first agent.

4. The method according to any one of claims 1 to 3, further comprising:
receiving capability information from the first agent, wherein the capability information indicates a type of data that the first agent is capable of sensing and/or a type of task that the first agent is capable of executing; and
determining that the capability information meets a capability requirement of the collaboration task for the agent participating in the collaboration task, wherein
the capability requirement is determined based on the description information of the collaboration task.

5. The method according to claim 4, wherein receiving the capability information from the first agent comprises:
receiving a registration request message of the first agent, wherein the registration request message comprises the capability information.

6. The method according to any one of claims 1 to 5, further comprising:
receiving an execution result of a subtask of the collaboration task from the collaborative execution function network element;
obtaining an execution result of the collaboration task based on the execution result of the subtask; and
sending the execution result of the collaboration task to the second agent.

7. The method according to any one of claims 1 to 6, further comprising:
determining, based on the description information of the collaboration task, that a maximum transmission delay required by the collaboration task is less than or equal to a threshold.

8. The method according to any one of claims 1 to 7, further comprising:
sending collaborative configuration request information to the first agent, wherein the collaborative configuration request information comprises a configuration parameter required for the first agent to participate in the collaboration task.

9. The method according to any one of claims 1 to 8, further comprising:
receiving a deregistration request message from the first agent; and
based on the deregistration request message, releasing a connection between the first agent and the collaborative control function network element, and/or releasing a connection between the first agent and the collaborative execution function network element.

10. The method according to any one of claims 1 to 9, wherein the first agent is a terminal device or an access network device.

11. A communication method, wherein the method is applied to a collaborative execution function network element in a network, the network is an access network or a core network, and the method comprises:
receiving second collaboration request information from a collaborative control function network element, wherein the second collaboration request information comprises description information of a collaboration task and an identifier of at least one agent participating in the collaboration task, and the at least one agent comprises a first agent; and
sending execution request information to the first agent, wherein the execution request information is used to request the first agent to execute a subtask of the collaboration task.

12. The method according to claim 11, further comprising:
receiving an execution result of the subtask from the first agent; and
sending the execution result of the subtask to the collaborative control function network element.

13. The method according to claim 11 or 12, further comprising:
receiving collaborative configuration response information from the first agent, wherein the collaborative configuration response information indicates that the first agent is successfully configured.

14. A communication method, wherein the method is applied to a first agent and comprises:
receiving execution request information from a collaborative execution function network element in a network, wherein the execution request information is used to request the first agent to execute a subtask of a collaboration task, and the network is an access network or a core network; and
executing the subtask based on the execution request information.

15. The method according to claim 14, further comprising:
sending status information of the first agent to a collaborative control function network element in the network, wherein the status information indicates a status of the first agent.

16. The method according to claim 15, wherein the status of the first agent comprises at least one of the following:
a network connection status of the first agent;
a compute resource status of the first agent;
a location status of the first agent;
a battery level status of the first agent;
a motion status of the first agent; and
a memory status of the first agent.

17. The method according to any one of claims 14 to 16, further comprising:
sending capability information of the first agent to the collaborative control function network element in the network, wherein the capability information of the first agent indicates a type of data that the first agent is capable of sensing and/or a type of task that the first agent is capable of executing.

18. The method according to any one of claims 14 to 17, further comprising:
receiving collaborative configuration request information from the collaborative control function network element in the network, wherein the collaborative configuration request information comprises a configuration parameter required for the first agent to participate in the collaboration task; and
sending collaborative configuration response information to the collaborative execution function network element, wherein the collaborative configuration response information indicates that the first agent is successfully configured.

19. The method according to any one of claims 14 to 18, further comprising:
sending an execution result of the subtask to the collaborative execution function network element.

20. The method according to any one of claims 14 to 19, wherein the first agent is a terminal device or an access network device.

21. A communication method, wherein the method is applied to a second agent and comprises:
sending first collaboration request information to a collaborative control function network element in a network, wherein the first collaboration request information comprises description information of a collaboration task, and the network is an access network or a core network; and
receiving collaborative response information from the collaborative control function network element, wherein the collaborative response information comprises an execution result of the collaboration task.

22. The method according to claim 21, wherein the second agent is a terminal device or an access network device.

23. A communication apparatus, comprising a processor, wherein the processor is coupled to a memory, the memory stores a computer program, and the processor is configured to invoke the computer program in the memory, so that the method according to any one of claims 1 to 22 is performed.

24. A communication system, wherein the communication system comprises a collaborative control function network element in a network, a collaborative execution function network element in the network, a first agent, and a second agent, the network is a core network or an access network, and the collaborative control function network element is configured to perform the method according to any one of claims 1 to 22.

25. A computer-readable storage medium, wherein the storage medium stores a computer program or instructions, and when the computer program or the instructions are executed by a computer, the method according to any one of claims 1 to 22 is performed.

26. A computer program product, comprising a computer program or instructions, wherein when the computer program or the instructions are executed by a computer, the method according to any one of claims 1 to 22 is performed.
